(19) Europäisches Patentamt
European Patent Office
Office européen des brevets

(11) EP 1 089 901 B1

(12) EUROPÄISCHE PATENTSCHRIFT

(45) Veröffentlichungstag und Bekanntmachung des Hinweises auf die Patenterteilung:
**09.01.2002 Patentblatt 2002/02**

(21) Anmeldenummer: **99931138.4**

(22) Anmeldetag: **22.06.1999**

(51) Int Cl.⁷: **B60T 8/00**

(86) Internationale Anmeldenummer:
**PCT/EP99/04324**

(87) Internationale Veröffentlichungsnummer:
**WO 99/67115 (29.12.1999 Gazette 1999/52)**

# (54) REGELSCHALTUNG ZUM REGELN DER FAHRSTABILITÄT EINES FAHRZEUGS ANHAND EINES FAHRZEUGREFERENZMODELLS

REGULATING CIRCUIT FOR REGULATING THE DRIVING STABILITY OF A MOTOR VEHICLE USING A MOTOR VEHICLE REFERENCE MODEL

CIRCUIT DE REGULATION POUR REGULER LA STABILITE DE ROULEMENT D'UN VEHICULE SUR LA BASE D'UN MODELE DE REFERENCE DE VEHICULE

(84) Benannte Vertragsstaaten:
**DE FR IT**

(30) Priorität: **22.06.1998 DE 19827654**
**01.02.1999 DE 19903691**
**28.04.1999 DE 19919180**

(43) Veröffentlichungstag der Anmeldung:
**11.04.2001 Patentblatt 2001/15**

(73) Patentinhaber: **Continental Teves AG & Co. oHG
60488 Frankfurt am Main (DE)**

(72) Erfinder:
- **HERRMANN, Torsten
D-60487 Frankfurt am Main (DE)**
- **JOKIC, Mile
Rochester Hills 48309 Michigan (US)**
- **LÜDERS, Ulrich
D-31303 Burgdorf (DE)**
- **DUIS, Holger
D-60439 Frankfurt am Main (DE)**
- **ENDRESS, Ralf
D-61267 Neu-Anspach (DE)**

(56) Entgegenhaltungen:
**DE-A- 4 446 534** **DE-A- 19 521 086**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft eine Regelschaltung zum Regeln der Fahrstabilität eines Fahrzeugs, bei der die zur Festlegung des Bahnverlaufs bestimmenden Eingangsgrößen, wie zum Beispiel ein Lenkradwinkel (δ), in eine Fahrzeugmodellschaltung eingegeben werden, welche aufgrund eines, die Eigenschaften des Fahrzeugs nachbildenden, Fahrzeugreferenzmodells mindestens einen Sollwert für eine Regelgröße in Abhängigkeit von in dem Fahrzeugreferenzmodell abgelegten Parametern bestimmt.

Regelschaltungen dieser Art sind z.B. aus DE 44 46 534 A oder DE 195 21 086 A bekannt.

Derartige Regelschaltungen dienen dazu, durch gezielte Eingriffe an einzelnen Bremsen eines Fahrzeugs ein zusätzliches Drehmoment zu schaffen und so eine tatsächlich gemessene Gierrate eines Fahrzeugs zu einer von einem Fahrer eingegebenen Gierrate hinzuführen.

Die Regelschaltungen greifen dann in das Lenkverhalten des Fahrzeugs ein, wenn das Fahrzeug sich auf einem Weg befindet, der nicht mit dem von dem Fahrer gewünschten Weg übereinstimmt.

Insbesondere bei äußeren Einflüssen, zum Beispiel durch unterschiedliche Haftung auf nassen, vereisten, beziehungsweise trockenen Fahrbahnabschnitten, Seitenwind und Lastwechselreaktionen ist ein zusätzliches Drehmoment erforderlich, damit der von dem Fahrzeug tatsächlich zurückgelegte Weg mit dem von dem Fahrer gewünschten Weg übereinstimmt.

Zur Drehmomentregelung werden insbesondere Eingangsgrößen, welche aus dem von dem Fahrer gewünschten Weg resultieren, beispielsweise Lenkradwinkel oder Geschwindigkeit, einer Fahrzeugmodellschaltung zugeführt, welche aus diesen Eingangsgrößen und für das Fahrverhalten des Fahrzeugs charakteristischen Parametern, aber auch durch die Eigenschaften der Umgebung vorgegebenen Größen (Reibwert der Fahrbahn und dergleichen) eine Sollgierrate bestimmt, die mit der gemessenen tatsächlichen Gierrate verglichen wird. Die Gierratendifferenz wird mittels eines sogenannten Giermomentreglers in ein Giermoment umgerechnet, welches eine Eingangsgröße der Regelschaltung bildet.

Die Regelschaltung bestimmt wiederum, gegebenenfalls in Abhängigkeit von dem einen bestimmten Bremsdruck an den Radbremsen anfordernden Bremswunsch des Fahrers, den an den einzelnen Bremsen aufzubringenden Bremsdruck. Dieser soll zusätzlich zu der gegebenenfalls erwünschten Bremswirkung noch ein zusätzliches Drehmoment an dem Fahrzeug erzeugen, welches das Fahrverhalten des Fahrzeugs in Richtung des Lenkwunsches des Fahrers unterstützt. Es zeigt sich dabei, daß die Güte der Regelung der Gierrate des Fahrzeugs maßgeblich durch die Qualität der Fahrzeugmodellschaltung bestimmt ist, welche aufgrund der Eingabewerte des Fahrers die gewünschte Gierrate vorgibt.

In der Regelschaltung können unterschiedliche Fahrzeugmodelle Anwendung finden, die rechnerisch das Fahrverhalten des Fahrzeugs simulieren, wobei allerdings die verschiedenen Fahrzeugmodelle von vereinfachten Annahmen hinsichtlich des Fahrverhaltens eines Fahrzeugs ausgehen.

Ein bekanntes Fahrzeugmodell ist das sogenannte lineare dynamische Einspurmodell. Hier werden die Fahreigenschaften eines Fahrzeugs rechnerisch auf ein Fahrzeugmodell reduziert, bei dem die Vorder- und Hinterräder jeweils paarweise zu einem Rad zusammengefaßt sind, welches sich auf der Fahrzeuglängsachse befindet.

Für ein Einspurmodell stehen in Zustandsraumdarstellung die Systemgleichungen:

$$\dot{\beta}=c_{11}\frac{\beta}{\upsilon}-\dot{\psi}+c_{12}\frac{\dot{\psi}}{\upsilon^2}+c_{13}\frac{\delta}{\upsilon} \quad (1)$$

$$\ddot{\psi}=c_{21}\beta+c_{22}\frac{\dot{\psi}}{\nu}+c_{23}\delta \quad (2)$$

Hierbei bezeichnet β einen Schwimmwinkel, $\dot{\psi}$ die

Gierwinkelgeschwindigkeit und δ den Lenkwinkel.

In den Systemgleichungen sind Modellkoeffizienten $c_{ii}$ enthalten, die wie folgt gebildet werden:

$$c_{11}=-\frac{c_h+C_\upsilon}{m} \quad c_{12}=\frac{c_h l_h - c_\upsilon l_\upsilon}{m} \qquad c_{13}=\frac{c_\upsilon}{m} \quad (3)$$

$$c_{21} = \frac{c_h l_h - c_\upsilon l_\upsilon}{\Theta} \qquad c_{22} = \frac{c_h l_h{}^2 - c_\upsilon l_\upsilon{}^2}{\Theta} \qquad c_{23} = \frac{c_\upsilon l_\upsilon}{\Theta} \tag{4}$$

Dabei stehen $c_h$ und $c_v$ für resultierende Steifigkeiten, die von der Regelschaltung zum Regeln der Fahrstabilität des Fahrzeugs unter Berücksichtigung der Radaufhängungs- und Lenkungselastizität an der Hinter- beziehungsweise Vorderachse ermittelt werden. Die Größen $l_h$ und $l_v$ stehen für die Abstände der Hinterachse und der Vorderachse vom Fahrzeugschwerpunkt. Θ ist das Gierträgheitsmoment des Fahrzeugs, also das Trägheitsmoment des Fahrzeugs um seine Hochachse.

Die den Modellkoeffizienten $c_{ij}$ zugrunde liegenden Normparameter für das abgelegte Einspurmodell werden durch Messungen außerhalb des Fahrzeugs anhand einer Offline-Parameteridentifikation gewonnen. Für die Identifikation werden dabei die gemessenen Regler- und Sensorgrößen der Fahrstabilitätsregelung verwendet. Zur Erfassung von fahrdynamischen Zuständen sind vier Drehzahlsensoren, pro Rad einer, ein Giergeschwindigkeitsmesser, ein Querbeschleunigungsmesser und mindestens ein Drucksensor für den vom Bremspedal erzeugten Bremsdruck am Fahrzeug vorhanden. Die Parameter werden anhand eines oder mehrerer Beispielfahrzeuge ermittelt, und der "Normparametersatz" wird in der Fahrzeugmodellschaltung abgelegt.

Im Fahrbetrieb ergeben sich bei Fahrzeugen mit im Fahrzeugmodell abgelegten Normparametersätzen Störanregungen durch die Fahrstabilitätsregelung, wenn die bei der Offline-Parameteridentifikation den Modellkoeffizienten zugrunde liegenden Zustandsgrößen von den tatsächlichen Zustandgrößen abweichen, die durch die individuelle Ausbildung oder Ausstattung des Fahrzeugs bestimmt werden. Die Abweichungen können von einem reinen Komfortproblem bis zu einer Beeinträchtigung des Fahrverhaltens des Fahrzeugs führen. Die Störanregelungen durch die Fahrstabilitätsregelung finden dann statt, wenn die individuelle Ausbildung des Fahrzeugs zu Abweichungen der im dynamischen Einspurmodell festgelegten Normparameter führt oder diese dem individuellen Fahrzeug aufgrund seiner individuellen Ausbildung zugrunde liegenden Parameter außerhalb von den Normparametern zugrunde liegenden Regelschwellen liegen.

Eine bekannte Lösung dieses Problems ist, Regelschwellen in kritischen Bereichen der Fahrzeugstabilität aufzuweiten. Dies führt zu Verlusten der Funktions- und Leistungsfähigkeit durch eine nicht nötige Schwellenaufweitung in Fahrzeugen mit einer individuellen Ausbildung oder Ausstattung, die von den im Einspurmodell festgelegten Normparametern erfaßt wird, und verhindert bei extremen Abweichungen in der Ausbildung oder Ausstattung eines Einzelfahrzeugs Störanregelungen nicht sicher.

Der Erfindung liegt die Aufgabe zugrunde, eine gattungsgemäße Regelschaltung zu schaffen, die Fehlanregungen vermeidet. Erfindungsgemäß wird diese Aufgabe dadurch gelöst, daß wenigstens einer der Parameter in Abhängigkeit von wenigstens einer bei einem stationären Fahrverhalten ermittelten separaten Meßgröße variiert wird.

Die Erfindung sieht also vor, eine gattungsgemäße Regelschaltung so auszugestalten, daß eine Adaption des Fahrzeugmodells durch Identifikation der fahrzeugspezifischen Normparameter von jedem einzelnen Fahrzeug mittels der von der Fahrzeugsensorik bereitgestellten Eingangsgrößen während des Betriebes vorgenommen wird. Der Erfindung liegt dabei die Erkenntnis zugrunde, daß durch unterschiedliche Ausbildungs- oder Ausstattungsvarianten der Fahrzeuge, wie zum Beispiel Bereifungsart (Winterreifen, Sommerreifen, Allwetterreifen), Bereifungsgröße (15"/16"/17"), Zustand, insbesondere Schräglaufsteifigkeit der Reifen, Fahrwerksänderungen, Produktionstoleranzen oder Beladung, das individuelle Fahrzeug sich erheblich von einem Beispielfahrzeug oder von Beispielfahrzeugen unterscheidet oder abweicht, die für die Ermittlung des im Einspurmodell abgelegten Normparametersatzes verwendet werden.

Eine vorteilhafte Ausgestaltung der Regelschaltung zeichnet sich dadurch aus, daß ein Fahrzeugidentifizierer (22) vorgesehen ist, dessen Ausgangssignale dem Fahrzeug-referenzmodell (23) zugeführt werden und daß die Ausgangssignale unter Berücksichtigung individueller Zustandsgrößen des Fahrzeugs (11) einen oder mehrere in dem Fahrzeugreferenzmodell (23) abgelegte Normparamter anpassen oder durch einen oder mehrere neu gebildete Normparameter ersetzen.

Eine weitere Verbesserung der Regelschaltung wird dadurch erreicht, daß der Fahrzeugidentifizierer (22) eine Identifikationsplausibilisierung (25) aufweist, die in Abhängigkeit von den eingegebenen individuellen Eingangsgrößen einen Identifikationsmodul (24) aktiv oder passiv schaltet.

Ferner ist es zweckmäßig, die Regelschaltung so zu gestalten, daß die Eingangsgrößen die Giergeschwindigkeit und/oder der Lenkwinkel und/oder die Lenkwinkelgeschwindigkeit und/oder die Querbeschleunigung und/oder die Längsbeschleunigung und/oder die Schwimmwinkelgeschwindigkeit und/oder die Radgeschwindigkeit sind.

Eine vorteilhafte Ausgestaltung der Regelschaltung zeichnet sich dadurch aus, daß Abweichungen von individuellen Eingangsgrößen bestimmt und über einen Identifikationsalgorithmus Parameterabweichungen der Normparameter oder tatsächliche Normparameter generiert werden.

Eine weitere Verbesserung der Regelschaltung wird dadurch erreicht, daß in einem Rechenblock die Abweichungen der individuellen Eingangsgrößen in die Parameterabweichungen der Normparameter oder tatsächliche

Normparameter umgesetzt werden.

Ferner ist es zweckmäßig, die Regelschaltung so zu gestalten, daß die Identifikationsplausibilisierung an den Identifikationsmodul Informationen darüber gibt, ob die individuellen Eingangsgrößen in einem vorgegebenen Toleranzband liegen.

Eine vorteilhafte Ausgestaltung der Regelschaltung zeichnet sich dadurch aus, daß die Parameterabweichungen der Normparameter oder der tatsächlichen Parameter innerhalb von vorgegebenen Grenzwertbändern bestimmt werden.

Eine weitere Verbesserung der Regelschaltung wird dadurch erreicht, daß die Parameterabweichungen der Normparameter oder tatsächliche Normparameter über Algorithmen zur Parameteridentifikation erlernt werden.

Ferner ist es zweckmäßig, die Regelschaltung so zu gestalten, daß die Parameterabweichungen der Normparameter oder tatsächliche Normparameter nach einem Least Square-Verfahren (LS) und/oder einem verallgemeinerten Least Square-Verfahren (GLS) und/oder einem instrumentalen Variabelverfahren (IV) und/oder einem Maximum-Likelyhood-Verfahren (ML) und/oder einem Output-Error-Verfahren erlernt werden.

Eine vorteilhafte Ausgestaltung der Regelschaltung zeichnet sich dadurch aus, daß das Fahrzeugreferenzmodell das dynamische Einspurmodell ist.

Eine weitere Verbesserung der Regelschaltung wird dadurch erreicht, daß wenigstens einer der Parameter einer Schräglaufsteifigkeit eines oder mehrerer Reifen entspricht oder von der Schräglaufsteifigkeit eines oder mehrerer Reifen abhängt.

Hierdurch wird sichergestellt, daß in jeder Fahrsituation mit individuell angepaßten Parametern eine möglichst große Referenzgröße zur Regelung des Fahrzeugs bereitgestellt wird.

Empirische Untersuchungen ergaben beim Identifizieren mehrerer Fahrzeugzustände folgende Schwankungen der Normparameter:

| | |
|---|---|
| Eigenlenkgradient EG | 3.23e-3 bis 4.34e-3 $s^2$*rad/m |
| Theta $\Theta$ | 1903 bis 2309 kg/$m^2$ |
| Reifensteifigkeit $c_v$ | 72084 bis 91113 N/rad |
| Reifensteifigkeit $c_h$ | 135299 bis 156308 N/rad |

Dadurch, daß ein Fahrzeugidentifizierer vorgesehen ist, dessen Ausgangssignale dem Fahrzeugreferenzmodell zugeführt werden und die Ausgangssignale unter Berücksichtigung individueller Zustandsgrößen des Fahrzeugs die in dem Fahrzeugreferenzmodell abgelegten Normparameter an das individuelle Fahrzeug anpassen oder durch neu gebildete Normparameter ersetzen, wird jedes Fahrzeug entsprechend seiner Ausbildung oder Ausstattung im Fahrzeugmodell online abgebildet. Dadurch werden Störanregelungen sicher vermieden, da selbst bei Extrembereifungen die entsprechenden Modellkoeffizienten $c_{ii}$ angepaßt werden. Durch das Erlernen der fahrzeugspezifischen Normparameter während vorgegebener Fahrzustände und deren zeitabhängigen oder vom Fahrzustand beziehungsweise Fahrverhalten des Fahrzeugs abhängigen Aktualisierung werden nicht nur die dem Fahrzeug zugeordneten fixen Ausbildungs- und/oder Ausstattungsvarianten, insbesondere des Drehmoments, berücksichtigt, sondern auch die sich aufgrund der Fahrzeugbewegung ergebenden Änderungen, zum Beispiel durch die Reifentemperatur, erfaßt und berücksichtigt. Die Fahrzeugparameter werden während der Fahrt mittels der von der Fahrzeugsensorik gemessenen Eingangsgrößen an das reelle, individuelle Fahrzeugverhalten angepaßt.

Vorteilhaft weist der Fahrzeugidentifizierer eine Identifikationsplausibilisierung auf, die in Abhängigkeit von den eingegebenen individuellen Eingangsgrößen einen Identifikationsmodul aktiv oder passiv schaltet. Durch die vorgesehene Identifikationsplausibilisierung wird eine Parameteridentifikation ausschließlich während einer stabilen Fahrt vorgenommen, da nur bei dieser Fahrsituation das Identifikationsmodul aktiv geschaltet ist und damit die Normparameter erlernt werden können. Die Aktivierung des Identifikationsmoduls während einer instabilen Fahrt wird sicher verhindert.

Nach einer Ausbildung wird die stabile Fahrt mittels gemessener Eingangsgrößen erkannt, die individuell an jedem Fahrzeug in Abhängigkeit von den Zustandsgrößen bestimmt werden. Die Eingangsgrößen sind die Giergeschwindigkeit und/oder der Lenkwinkel und/oder die Querbeschleunigung und/oder die Längsbeschleunigung und/oder die Schwimmwinkelgeschwindigkeit und/oder die Radgeschwindigkeiten. Darüber hinaus werden der Identifikationsplausibilisierung Zustandsgrößen anderer Regelschaltungen oder Regelsysteme, wie Antiblockiersysteme (ABS), Antriebsschlupfregelsysteme (ASR) als Eingangsgrößen zugeführt. Die den aktuellen Zustand dieser Regelschaltungen oder -systeme abbildenden Eingangsgrößen dienen ebenfalls zur Erkennung der stabilen Fahrt, die in der Identifikationsplausibilisierung unter Bewertung der vorstehend genannten Eingangsgrößen dann stabil ist, wenn keine der weiteren Regelschaltungen aktiv ist. Eine stabile Fahrt liegt zum Beispiel vor, wenn die Eingangsgrößen eines individuellen Fahrzeugs die folgenden Bedingungen erfüllt:

Querbeschleunigung ($a_{Quer}$) < 0,3 g
Längsbeschleunigung ($a_{Long}$) < 0,1 g
Giergeschwindigkeit ($\dot{\psi}$) < 10°/s$^2$
Lenkgeschwindigkeit ($\dot{\delta}$) < 90°/s

und weitere Regelschaltungen nicht aktiv sind. Unter den vorstehend genannten Bedingungen wird der Identifikationsmodul aktiv geschaltet.

Nach einer bevorzugten Ausführungsform der Erfindung werden im Identifikationsmodul oder einem Vergleicher, der Bestandteil des Identifikationsmoduls oder der Verteilungslogik ist, die Abweichungen der individuellen Eingangsgrößen bestimmt und über einen Identifikationsalgorithmus Parameterabweichungen der Normparameter oder tatsächliche Normparameter generiert. Vorteilhaft weist hierzu der Identifikationsmodul einen Rechenblock auf, der die individuellen Eingangsgrößen und/oder deren Abweichungen in die Parameterabweichungen der Normparameter oder tatsächlichen Normparameter umsetzt. Dabei werden die Parameterabweichungen der Normparameter oder tatsächliche Normparameter nach dem Least Square-Verfahren (LS) und/oder verallgemeinerten Least Square-Verfahren (GLS) und/oder Instrumentablen Variablen Verfahren (IV) und/oder Maximum-Likelyhood-Verfahren (ML) und/oder Output-Errorverfahren (OE) erlernt. Ein Least Square-Verfahren ermittelt aus den Abweichungen der individuellen Eingangsgrößen die Normparameter durch eine Minimierung des Fehlers zwischen Fahrzeugreferenzmodell und Fahrzeug. Dabei wird als Gütekriterium das Minimieren der Summe der Quadrate des Modellfehlers eingesetzt. Es kann eine direkte Lösung durch ein Nullsetzen einer ersten partiellen Ableitung ermittelt werden.

Dabei stellt die Identifikationsplausibilisierung dem Identifikationsmodul Kenngrößen zur Verfügung, mittels derer bestimmt werden kann, ob die individuellen Eingangsgrößen oder deren Abweichungen zwischen gemessenen Ist-Eingangsgrößen und den im Regler berechneten Soll-Eingangsgrößen in einem vorgegebenen Toleranzband liegen. Aus der Ableitung der im vorgegebenen Toleranzband liegenden individuellen Eingangsgrößen sind die mit den individuellen Größen korrelierbaren Parameter innerhalb vorgegebener Grenzwertbänder bestimmt.

weitere Vorteile, Besonderheiten und zweckmäßige Weiterbildungen der Erfindung ergeben sich aus den Unteransprüchen und der nachfolgenden Darstellung bevorzugter Ausführungsbeispiele der Erfindung anhand der Zeichnungen.

Von den Zeichnungen zeigt:

Fig. 1 einen allgemeinen Aufbau einer Regelschaltung mit Fahrzeugidentifizierer

Fig. 2 den Fahrzeugidentifizierer nach Fig. 1 mit Identifikationsplausibilisierung und Identifikationsmodul

Fig. 3 Multiplikationsfaktoren f für einen ursprünglichen Eigenlenkgradienten $EG_a$ in Abhängigkeit von Veränderungsfaktoren d für Reifensteifigkeiten

Fig. 4 eine erste Übertragungsfunktion 1/s in Abhängigkeit von der Geschwindigkeit

Fig. 5 eine weitere Übertragungsfunktion 1/s in Abhängigkeit von der Geschwindigkeit

Fig. 6 eine weitere übertragungsfunktion 1/s in Abhängigkeit von der Geschwindigkeit

Fig. 7 eine weitere Übertragungsfunktion 1/s in Abhängigkeit von der Geschwindigkeit.

Fig. 1 zeigt den grundsätzlichen Aufbau der Regelschaltung 10 zum Regeln der Fahrstabilität eines Fahrzeugs. Auf das Fahrzeug wirken die vom Fahrer gegebenen Größen Fahrerbremsdruck $P_{Fahrer}$ und Lenkwinkel $\delta$. Am Fahrzeug 11 werden die hieraus resultierenden Größen Motor-Ist-Moment 12, Querbeschleunigung $a_{Quer}$ 13, Gierwinkelgeschwindigkeit $\dot{\psi}$ 14, Raddrehzahlen 15 und Hydrauliksignale 16 wie Radbremsdrücke gemessen. Zur Auswertung dieser Daten weist die Fahrstabilitätsregelschaltung vier elektronische Regler 17, 18, 19 und 20 auf, wobei vorzugsweise jeder der elektronischen Regler 17, 18, 19 und 20 jeweils einem Regelsystem zugeordnet ist. Der Regler 17 gehört zu einem Antiblockiersystem ABS, der Regler 18 zu einer Antriebsschlupfregelung ASR, der Regler 19 zu einer elektronischen Bremskraftverteilung EBV und der Regler 19 zu einer Giermomentregelung GMR. Die elektronischen Regler ABS 17, ASR 18 und EBV 19 können unverändert dem Stand der Technik entsprechen und werden daher nicht näher beschrieben.

Der Regler 20 zur Giermomentregelung GMR erhält zusätzlich noch Daten über das herrschende Motormoment, das Motor-Ist-Moment. Außerdem erhält er von Sensoren die Daten über die Querbeschleunigung $a_{Quer}$ und die Gierwinkelgeschwindigkeit $\dot{\psi}$ des Fahrzeugs 11. Da im Regler 17 des ABS über die Einzelraddrehzahlen der Fahrzeugräder ohnehin eine Fahrzeug-Referenzgeschwindigkeit VREF ermittelt wird, anhand derer ein übermäßiger

Bremsschlupf eines der Räder festgestellt werden kann, muß eine derartige Referenzgeschwindigkeit nicht im GMR-Regler 20 berechnet werden, sondern wird vom ABS-Regler 17 als Eingangsgröße übernommen. Weitere Eingangsgrößen wie zum Beispiel die Längsbeschleunigung $a_{Long}$ und die Bestimmung des Fahrbahnreibwertes $\mu$, die zur Giermomentregelung herangezogen werden, werden in ihrer Generierung ebenso wie weitere Eingangsgrößen nicht näher beschrieben.

Alle vier elektronischen Regler arbeiten anhand ihrer eigenen Regelstrategien Bremsdruckvorgaben für die einzelnen Räder aus.

Die Druckvorgaben des GMR-Reglers 20 für die einzelnen Radbremsdrücke werden folgendermaßen ermittelt:

Der GMR-Regler 20 berechnet zunächst ein zusätzliches Giermoment $M_G$, welches zur Stabilisierung des Fahrzustandes innerhalb einer Kurve führt, wenn es durch entsprechende Bremsbetätigung erzeugt wird. Dieses $M_G$ wird einer Verteilungslogik 21 zugeführt, welche auch als Teil des GMR-Reglers 20 dargestellt werden könnte. In diese Verteilungslogik 21 fließt außerdem ein möglicherweise vorhandener Fahrerwunsch zur Fahrzeugverzögerung ein, der anhand des Fahrerbremsdruckes $P_{Fahrer}$ erkannt wird. Die Verteilungslogik 21 berechnet aus dem vorgegebenen Giermoment $M_G$ und aus dem gewünschten Fahrerbremsdruck Giermomentregeldrücke $P_{GMR}$ für die Radbremsen, welche individuell für die einzelnen Räder sehr unterschiedlich sein können. Diese Giermomentregelbremsdrücke $P_{GMR}$ werden genauso wie die von den übrigen Reglern 17, 18 und 19 zur Funktionsoptimierung berechneten Druckvorgaben einer nicht näher dargestellten Schaltung für die Radbremsdrücke zugeführt. Diese Schaltung ermittelt unter Berücksichtigung des Fahrerwunsches Soll-Raddrücke für eine optimale Fahrstabilität.

Fig. 1 zeigt den GMR-Regler 20, in dem ein Fahrzeugreferenzmodell abgelegt ist, welches anhand des Lenkwinkels $\delta$, einer Fahrzeugreferenzgeschwindigkeit (über den ABS-Regler 17) sowie der gemessenen Gierwinkelgeschwindigkeit $\dot{\psi}_{Meß}$ eine Vorgabe für eine Änderung der Gierwinkelgeschwindigkeit $\Delta\dot{\psi}$ berechnet. Des weiteren werden der Reibwert und situationsbedingte Einflußgrößen sowie weitere Einflußgrößen dem GMR-Regler 20 zugeführt.

In der Fig. 1 werden beispielhaft die Änderungsvorgaben $\Delta$ für die Gierwinkelgeschwindigkeit $\psi$ als Kriterium einem Fahrzeugidentifizierer 22 als Eingangsgröße zugeführt, der im Fahrzeug-Referenzmodell 23 abgelegte Normparameter durch veränderte oder neue Normparameter P ersetzt beziehungsweise die abgelegten Normparameter unter Berücksichtigung der individuellen Zustandsgrößen des Fahrzeugs anpaßt.

Fig. 2 zeigt ein Blockschaltbild, bei dem innerhalb des Fahrzeugidentifizierers 22 die Parameterabweichungen der Normparameter oder tatsächliche Normparameter erzeugt werden. Hierzu fließen die Abweichungen $\Delta$ der individuellen Eingangsgrößen, wie Giergeschwindigkeit $\dot{\psi}$ und/oder Lenkwinkel $\delta$ und/oder Lenkwinkelgeschwindigkeit $\dot{\delta}$ und/oder Querbeschleunigung $a_{Quer}$ und/oder Längsbeschleunigung $a_{Long}$ und/oder die Schwimmwinkelgeschwindigkeit $\dot{\beta}$ und/oder Radgeschwindigkeiten in einen Identifikationsalgorithmus eines Identifikationsmoduls 24 ein. In einem Rechenblock des Identifikationsmoduls 24 werden die Abweichungen der individuellen Eingangsgrößen in Parameterabweichungen der Normparameter oder tatsächliche Normparameter umgesetzt. Die Parameterabweichungen der Normparameter oder die tatsächlichen Normparameter, wie Eigenlenkgradient EG, Gierträgheitsmoment $\Theta$ und/oder die Schräglaufsteifigkeiten $c_v$ und $c_h$ werden über Algorithmen zur Parameteridentifikation nach dem LS-Verfahren und/oder dem GLS-Verfahren und/oder dem IV-Verfahren und/oder dem ML-verfahren und/oder dem Output-Error-Verfahren erlernt.

Bei dem LS-Verfahren werden aus den Abweichungen der individuellen Eingangsgrößen die Normparameter durch eine Minimierung des Fehlers zwischen Fahrzeugreferenzmodell und Fahrzeug ermittelt. Dabei wird als Gütekriterium das Minimieren der Summe der Quadrate des Modellfehlers eingesetzt. Es kann eine direkte Lösung durch das Nullsetzen der ersten partiellen Ableitung ermittelt werden.

Die so generierten Parameterabweichungen der Normparameter oder die tatsächlichen Normparameter, die von den individuellen Zustandsgrößen des Fahrzeugs 11, wie der Bereifungsart, der Bereifungsgröße, Fahrwerksänderungen, Produktionsstreuungen, Beladung und dergleichen abhängig sind, werden dem Fahrzeug-referenzmodell zugeführt, die den dort abgelegten Normparametersatz an das individuelle Fahrzeug 11 anpassen oder ersetzen.

Dem Identifikationsmodul ist eine Identifikationsplausibilisierung 25 zugeordnet, die in Abhängigkeit von den eingegebenen individuellen, gemessenen Eingangsgrößen, wie Gier geschwindigkeit $\dot{\psi}$ und/oder Lenkwinkel $\delta$ und/oder Lenkwinkelgeschwindigkeit $\dot{\delta}$ und/oder Querbeschleunigung $a_{Quer}$ und/oder Längsbeschleunigung $a_{Long}$ und/oder Schwimmwinkelgeschwindigkeit $\beta$ und/oder Radgeschwindigkeiten $v_R$ den Identifikationsmodul 24 aktiv oder passiv schaltet. Zusätzlich erhält die Identifikationsplausibilisierung 25 mindestens über die ABS-und ASR-Regler 17, 18 die Zustandsgrößen dieser Regler 17 beziehungsweise 18, das heißt, darüber, ob im Regelmodus der ABS-Regler 17 und der ASR-Regler 18 aktiv oder passiv sind. Anhand dieser individuellen Eingangsgrößen wird ein stabiles Fahrzeug 11 sensiert und der Identifikationsmodul 24 aktiv geschaltet. Gemäß einem Ausführungsbeispiel wird der Identifikationsmodul 24 aktiv geschaltet, wenn der ABS-Regler 17 und der ASR-Regler 18 nicht aktiv sind und die Querbeschleunigung kleiner als 0,3 g, die Längsbeschleunigung kleiner als 0,1 g, die Giergeschwindigkeit kleiner als $10°/s^2$ und die Lenkgeschwindigkeit kleiner als 90°/sec. ist. Nur bei einer mittels Grenzwerten festgelegten stabilen Fahrt des Fahrzeugs 11 können im Identifikationsmodul 24 über die Algorithmen zur Parameteridentifikation die Parameterabweichungen der Normparameter oder tatsächliche Normparameter generiert und über eine Rückkopplung zum Fahrzeugreferenzmodell 23 online die Abweichung des Normparametersatzes korrigiert werden. Zum Unterbinden des Erlernens der Parameterabweichungen der Normparameter oder der tatsächlichen Normparameter auf extreme oder unplausible Werte wird von der Identifikationsplausibilisierung. 25 ermittelt, ob die generierten Parameterabweichungen der Normparameter oder der generierten tatsächlichen Normparameter innerhalb von vorgegebenen Grenzwertbändern liegen. Die Identifikationsplausibilisierung 25 gibt diese Informationen an den Identifikatonsmodul 24 ab. Durch die Begrenzung der generierten Parameterabweichungen oder tatsächlichen Normparameter innerhalb vorgegebener Toleranzbänder, die über die individuellen Eingangsgrößen abgeleitet werden, wird sichergestellt, daß die im Fahrzeug-Referenzmodell 23 abgelegten, an das individuelle Fahrzeug 11 angepaßten Normparameter innerhalb plausibler Wertebereiche liegen. Durch das Minimieren der Modellabweichung im stabilen Fahrzustand werden die Parameter für das Einspurmodell einzelfahrzeugabhängig abgelegt, die dann im instabilen Fahrzustand des Fahrzeugs oder Übergangsbereich ideal zum realen Fahrzeugverhalten passen.

Es hat sich gezeigt, daß das Regelverhalten des Giermomentreglers, der auf dem Vergleich zwischen gemessener und berechneter Gierrate beruht, bei gleichem Fahrzeug mit unterschiedlichen Bereifungen sehr differieren kann. Dies kann zum einen durch stark unterschiedlich abgefahrene Reifen an Vorder-und Hinterachse oder aber durch Reifen mit einer extremen Gummimischung, zum Beispiel All-Season Reifen, hervorgerufen werden. In beiden Fällen verändert sich das Fahrverhalten so stark, daß die für das Fahrzeug mittels Parameteridentifikation ermittelten Einspurmodellparameter nicht mehr passen und es schon bei stabilen Fahrmanövern zu einer massiven Abweichung zwischen Modell- und Ist-Gierrate kommt, was die Empfindlichkeit gegen Fahrbahnstörung extrem erhöht und zu unerwünschten Regeleingriffen führen kann.

Ein Ansatz zur Lösung dieses Problems ist die Verwendung eines der bekannten Verfahren zur online-Parameterschätzung. Aus Kapazitäts- und Laufzeitgründen ist die Realisierung eines solchen Verfahrens in den heute verwendeten Steuergeräten jedoch nicht möglich.

Daher wurden Untersuchungen darüber durchgeführt, ob es nicht ein einfacheres Verfahren zur Optimierung der Sollgierrate gibt. Dabei hat sich ergeben, daß eine maßgebliche Größe für den Verlauf des Einspurmodells die Schräglaufsteifigkeit an der Hinterachse ist. Zur Entwicklung eines Adaptionsverfahrens für diese Größe wurde zunächst ein Kriterium gefunden, nach dem die Schräglaufsteifigkeit aus den zur Verfügung stehenden Signalen adaptiert werden kann. Bei Fahrversuchen hat sich außerdem gezeigt, daß das Verhalten des Einspurmodells in den stabil gefahrenen Fahrsituationen Antriebs-, Brems- und Schleppmomentenfall nicht immer gleich gut mit der gemessenen Gierrate übereinstimmt. Daraus ergab sich die weitere Anforderung, die Schräglaufsteifigkeit an der Hinterachse für die drei Situationen getrennt zu lernen und je nach Fahrsituation auf das Einspurmodell korrigierend wirken zu lassen. Es war daher notwendig, Lernbedingungen zu ermitteln, mit denen zum einen die Fahrsituation unterschieden und die Adaptionsintervalle eingegrenzt werden können.

Die vereinfachten Differentialgleichungen zur Beschreibung der Fahrzeugbewegung gehen i.d.R. von linearen und stationären Verhältnissen aus. Um die Gültigkeit dieser Gleichungen zu gewährleisten, darf eine Adaption nur durchgeführt werden, wenn durch Lernbedingungen oben genannte Verhältnisse abgesichert werden können.

Um ein stationäres Fahrverhalten festzustellen, sollen vorzugsweise folgende Bedingungen erfüllt sein:

1,5 [m/s$^2$] < Querbeschleunigung < 6.5 [m/s$^2$] und

|Gierbeschleunigung| < 25 [Grad/s$^2$] und

|Lenkwinkelgeschwindigkeit| < 150 [Grad/s].

Wenn diese Bedingungen erfüllt sind, wird der Lernalgorithmus gestartet, wobei über eine Auswertung des Bremsdrucks, des Motor- und Reibmoments und der Fahrer-Momentanforderung die 3 oben genannten Fahrsituationen unterschieden werden.

Zur Adaption der Schräglaufsteifigkeit wird vorzugsweise folgendes Verfahren verwendet:

Ausgehend von dem stationären Ansatz für die Giergeschwindigkeit

$$\dot{\psi} = \frac{\delta^{*}\upsilon}{l + \upsilon^{2} {}^{*}EG} \tag{5}$$

und der Gleichung für den Eigenlenkgradienten

$$EG = \frac{m*\left(c_r*l_r - c_f*l_f\right)}{l*c_r*c_f} \quad (6)$$

ergibt sich folgende Beziehung für die gemessene Gierrate:

$$\dot{\psi}_{mess} = \frac{\delta*\upsilon}{l + \upsilon^2*m*\frac{c_r*l_r - c_f*l_f}{l*c_r + c_f}} \quad (7)$$

Durch Auflösen von Gl.(7) nach der Schräglaufsteifigkeit an der Hinterachse ergibt sich folgende Beziehung:

$$c_{r_neu} = \frac{\dot{\psi}*\upsilon^2*m*c_f*l_f}{\dot{\psi}*\upsilon^2*m*l_r + l^2*c_f - \delta*\upsilon*l*c_f} \quad (8)$$

$c_{r_neu}$ entspricht also dem Wert der Schräglaufsteifigkeit an der Hinterachse, welcher nötig wäre, damit bei der vorgegebenen Fahrzeuggeschwindigkeit und dem vorgegebenen Lenkwinkel das

Fahrzeug die gemessene Gierrate erreicht, wenn die restlichen Einspurmodellparameter als konstant angenommen werden.

Da nur die prozentuale Veränderung zur ursprünglichen Schräglaufsteifigkeit interessiert, wird $c_{h_neu}$ durch $c_{h_alt}$ dividiert.

Außerdem wird zur Vereinfachung der Rechnung der Term von Gl.(8) durch $\dot{\psi}*v*m*l_r$ dividiert, wodurch sich mit einer Skalierung von 100/1024 [Prozent/LSB]

$$1024*\frac{c_{h_neu}}{c_{h_alt}} = \frac{\upsilon*\frac{1024*c_f*l_f}{2*c_{h_alt}}}{\frac{\upsilon}{2} + \frac{1}{\upsilon}*\frac{c_f*l^2}{2*m*l_r} - \frac{\delta}{\dot{\psi}}*\frac{c_f*l}{2*m*l_r}} = \Delta C_{h_corr_fac} \quad (9)$$

ergibt.

Im rechten Term werden Zähler und Nenner durch 2 dividiert, um beim späteren Einsetzen der Zahlenwerte nicht den Integer Zahlenbereich zu überschreiten.

Solange die Lernbedingungen erfüllt sind und $\Delta C_{h_corr_fac}$ eine Abweichung kleiner als 20% zeigt, wird $\Delta C_{h_corr_fac}$ aufintegriert und der Integrationszeitraum berechnet. Werte, die eine Abweichung größer als 20% bedeuten würden, werden in dem Integral nicht berücksichtigt.

Falls sich die Lernsituation (Antriebs-, Brems- und Schleppmomentensituation) ändern oder die Bedingungen

Giermomentregler nicht aktiv und
keine Rückwärtsfahrt und
kein MSR aktiv und
kein TCS aktiv und
|geschätzter Querneigungswinkel| < 5°

nicht mehr erfüllt sind und mindestens 225 loops integriert wurden, wird das Korrekturwert-Integral durch die Integrationsdauer dividiert, um einen Mittelwert zu erhalten. Dieser Mittelwert wird zur Adaption der bisher für die jeweilige Fahrsituation gelernten Schräglaufsteifigkeit verwendet, wobei gilt

$$\Delta C_{h_corr_fac1_neu} = \Delta C_{h_corr_fac1_alt} + \left(\overline{\Delta C_{h_corr_fac}} - \Delta C_{h_corr_fac1_alt}\right)*01 \quad (10)$$

Die Schräglaufsteifigkeiten für die 3 verschiedenen Fahrsituationen werden durch den Index corr_fac1..3 unterschieden.

Die Kriterien für die Erkennung der Fahrsituation werden ebenfalls genutzt, um zu entscheiden, mit welchem $\Delta C_{r_corr_facx}$ die ursprünglich identifizierte Schräglaufsteifigkeit an der Hinterachse bei der Berechnung des Einspurmodells korrigiert wird. Dadurch wird gewährleistet, daß das Einspurmodell in jeder Fahrsituation mit individuell angepaßten Parametern berechnet wird, um eine möglichst gute Referenzgröße darzustellen.

Es ist besonders zweckmäßig, das Verfahren wie folgt duchzuführen:

Im mittleren Querbeschleunigungsbereich werden im Übersteuerfall Fehlanregelungen des ESP Gierratenreglers beobachtet, die auf Reifen mit verminderter Steifigkeit aufgrund erhöhter Temperatur oder weicher Reifenmischung zurückzuführen sind. Da diese Steifigkeitsabnahme in der Sollwertgenerierung des Reglers, dem sogenannten Einspurmodell, nicht modelliert wird, tritt eine Regeldifferenz auf, obwohl keine Fahrzeuginstabilität vorhanden ist.

Hierzu ist es besonders zweckmäßig, von einer stationären Übertragungsfunktion auszugehen, die wie nachfolgend dargestellt behandelt wird.

Aus der stationären Übertragungsfunktion wird eine Bestimmungsgleichung für eine Korrektur des Eigenlenkgradienten abgeleitet. Diese wird im stationären Fahrzeugzustand ausgewertet und aus dem ermittelten Eigenlenkgradienten mit Hilfe einer Hypothese zur Veränderung der Reifenschräglaufsteifigkeit deren aktueller Wert bestimmt. Auf diese Weise wird das geänderte Eigenlenkverhalten des Fahrzeugs mit dem Einspurmodell abgebildet.

Die stationäre Übertragungsfunktion des linearen Einspurmodells lautet:

$$\frac{\dot{\psi}}{\delta} = \frac{\upsilon}{l + \upsilon^2 EG} \tag{11}$$

wobei

$\dot{\psi}$ -die Gierrate des Fahrzeugs
$\delta$ -Lenkwinkel am Rad
l -Abstand der Fahrzeugzeugachsen (Radstand)
v -Fahrzeuggeschwindigkeit
EG -Eigenlenkgradient des Fahrzeuges.

ist.

Unter der Annahme, daß sich der Eigenlenkgradient um den Faktor f verändert hat, ergibt sich mit dem ursprünglichen Eigenlenkgradienten $EG_a$

$$EG = f \cdot EGa \tag{12}$$

und es folgt aus dieser Annahme und G1.(11) eine Bestimmungsgleichung für den Faktor f:

$$f = \frac{1}{EG_a}\left(\frac{\delta}{v\dot{\psi}} - \frac{1}{v^2}\right) \tag{13}$$

Aufgrund des Gültigkeitsbereichs von Gl.(13) kann eine Bestimmung des Faktors f nur im stationären Zustandsbereich des Fahrzeugs erfolgen, das heißt sowohl die Lenkradwinkelgeschwindigkeit als auch die Gierbeschleunigung dürfen bestimmte maximale Grenzwerte nicht überschreiten. Weiterhin sollte zur eindeutigen Bestimmbarkeit des Faktors und um Hochreibwertverhältnisse zu detektieren, die Querbeschleunigung größer sein als ein Grenzwert (ca. 3 $m/s^2$). Die Querbeschleunigung sollte jedoch ebenso kleiner sein, als ein Grenzwert (ca. 5 $m/s^2$), um noch im linearen Gültigkeitsbereich von Gl.(11) zu verbleiben. Da Gl.(11) streng genommen nur für den Freirollfall angesetzt ist, sollte der Schlupf (Brems- und Antriebsschlupf) an allen vier Rädern kleiner sein als ein Maximalwert, so daß die aufgebauten Querkräfte noch nicht merkbar reduziert sind.

Solange der Schlupf an allen vier Rädern kleiner ist als der Maximalwert, werden die aus Gl.(13) bestimmten Korrekturfaktoren summiert und daraus ein Mittelwert gebildet. Sind die Bedingungen wieder verletzt, dann wird aus diesem Wert und dem aktuellen Korrekturfaktor ein Mittelwert gebildet, der dann den neuen Korrekturwert darstellt.

Die Beziehung zwischen dem Eigenlenkgradienten und den Schräglaufsteifigkeiten lautet:

$$EG = \frac{m\left(c_h \cdot l_h - c_v^{'} \cdot l_v\right)}{c_h \cdot c_v^{'} \cdot l} \qquad (14)$$

m - Fahrzeugmasse
$c_{\upsilon}^{'}$ - Gesamtseitensteifigkeit Vorderachse
$c_h$ - Schräglaufsteifigkeit Reifen Hinterachse
$l_v$ - Abstand Vorderachse/Schwerpunkt
$l_h$ - Abstand Hinterachse/Schwerpunkt
l - Radstand.

Die Gesamtseitensteifigkeit der Vorderachse setzt sich aus der Hintereinanderschaltung der Reifenschräglaufsteifigkeit und der Lenkungssteifigkeit zusammen:

$$\frac{1}{c_{\upsilon}^{'}} = \frac{1}{c_{\upsilon}} + \frac{1}{c_L^{'}} \qquad (15)$$

$c'_L$ - Lenkungssteifigkeit (bezogen auf den Gesamtnachlauf)
$c_v$ - Schräglaufsteifigkeit Reifen Vorderachse

Damit steht zur Bestimmung der beiden Steifigkeiten bei bekannten Eigenlenkgradienten nur eine Gleichung zur Verfügung. Exemplarisch sollen hier vier Modelle dargestellt werden:

1) Beide Steifigkeiten verändern sich mit gleichem Faktor d:

$$c_{\upsilon}^{'} = c_{\upsilon,a}^{'} \cdot d \qquad c_h = c_{h,a} \cdot d \qquad (16)$$

2) Die Schräglaufsteifigkeit der Reifen der Hinterachse $c_{h,a}$ verändert sich um den Faktor d und die Seitensteifigkeit der Vorderachse bleibt konstant:

$$c_v^{'} = konst \qquad c_h = c_{h,a} \cdot d \qquad (17)$$

3) Die Seitensteifigkeit der Vorderachse $c_{\upsilon}^{'}$ verändert sich um den Faktor d und die Schräglaufsteifigkeit der Reifen an der Hinterachse bleibt konstant:

$$c_v^{'} = c_{v,a}^{'} \cdot d \qquad c_h = konst \qquad (18)$$

4) Die Schräglaufsteifigkeiten der Reifen der Hinter- und Vorderachse ($c_{h,a}$ und $c_{v,a}$) verändern sich um den Faktor d:

$$c_v = c_{v,a} \cdot d \qquad c_h = c_{h,a} \cdot d \qquad (19)$$

Setzt man diese Modelle in Gl.(14) ein und berücksichtigt Gl.(2), dann lassen sich die Faktoren d direkt berechnen. Die Ergebnisse lauten:

Modell 1:

$$d = 1/f \quad (20)$$

Modell 2:

$$d = \frac{m \cdot c_v \cdot l_v}{\left(m \cdot c_{h,a} \cdot l_h - f \cdot EG_a \cdot c_{h,a} \cdot c_v \cdot l\right)} \quad (21)$$

Modell 3:

$$d = \frac{m \cdot c_h \cdot l_h}{\left(m \cdot c_{v,a} \cdot l_v + f \cdot EG_a \cdot c_h \cdot c_{v,a} \cdot l\right)} \quad (22)$$

Modell 4:

$$d = \frac{m\left(l_h \frac{c_{h,a}}{c_{v,a}} - l_v\right)}{c_{h,a}\left(EG_a \cdot f \cdot l - m \frac{l_h}{c_L'}\right)} \quad (23)$$

Beispielhaft sind diese Funktionen für die folgenden Parameter in Abb. 3 dargestellt (Fahrzeug: SLK, MB R 170):

m = 1453 kg
$c_v$ = 80384 N/rad
$c_h$ = 131565 N/rad
$l_v$ = 1.128 m
$l_h$ = 1.264 m
l = 2.392 m
EG = 0.00434 $s^2$rad/m

Aus Fig. 3 ist entnehmbar, daß das Fahrzeug bei Abnahme der jeweiligen Steifigkeit, die durch eine Verkleinerung von d wiedergegeben wird, nur bei Modell 2 eine Verkleinerung des Eigenlenkgradienten und damit eine Verkleinerung der Untersteuerungsneigung aufweist. Für die beiden anderen Modelle wird das Fahrzeug mit Verringerung des Faktors d stärker untersteuernd. Bei den vorliegenden Messungen wurde bei Verwendung weicherer Reifenmischungen ein Verhalten beobachtet, das dem von Modell 2 entspricht.

Die gemachten Aussagen werden auch von den Fig. 4 bis 7 unterstützt, die Gl.(11) über der Geschwindigkeit für die genannten Modelle zeigen. Somit bietet sich eine Anpassung des Eigenlenkverhaltens des Einspurmodells über die Schräglaufsteifigkeit der Reifen der Hinterachse an.

Die beste Ausführungsform der Erfindung beinhaltet eine Ableitung der Bestimmungsgleichung für die Eigenlenkgradienten aus der stationären Übertragungsfunktion zur Identifikation des aktuellen Eigenlenkgradienten des Fahrzeugs und der Anpassung des Eigenlenkverhaltens des Einspurmodells über dessen Reifenschräglaufsteifigkeiten.

Bei anderen Spurmodellen ist die Erfindung jedoch gleichfalls anwendbar. Die dargestellten Modifikationen des Eigenlenkgradienten erfolgen in anderen Spurmodellen entsprechend.

Die Erfindung ist in keiner Weise darauf beschränkt, den Eigenlenkgradienten in Abhängigkeit von der Reifensteifigkeit zu verändern, sondern umfaßt eine Beeinflussung des Eigenlenkgradienten durch spezifische Parameter des Fahrzeugs und/oder Normparameter der Fahrzeugserie, zu der es gehört.

**Patentansprüche**

1. Regelschaltung zum Regeln der Fahrstabilität eines Fahrzeugs, bei der die zur Festlegung des Bahnverlaufs bestimmenden Eingangsgrößen in eine Fahrzeugmodellschaltung eingegeben werden, welche aufgrund eines Eigenschaften des Fahrzeugs nachbildenden Fahrzeugreferenzmodells mindestens einen Sollwert für eine Regelgröße in Abhängigkeit von im Fahrzeugreferenzmodell abgelegten Parametern bestimmt, **dadurch gekennzeichnet, daß** .wenigstens einer der Parameter in Abhängigkeit von wenigstens einer, bei einem stationären Fahrverhalten ermittelten separaten Meßgröße variiert wird.

2. Regelschaltung nach Anspruch 1, **dadurch gekennzeichnet, daß** ein Fahrzeugidentifizierer (22) vorgesehen ist, dessen Ausgangssignale dem Fahrzeugreferenzmodell (23) zugeführt werden und daß die Ausgangssignale unter Berücksichtigung mindestens einer individuellen Zustandsgröße des Fahrzeugs (11) einen oder mehrere in dem Fahrzeugreferenzmodell (23) abgelegte Normparamter anpassen oder durch einen oder mehrere neu gebildete Normparameter ersetzten.

3. Regelschaltung nach Anspruch 2, **dadurch gekennzeichnet, daß** der Fahrzeugidentifizierer (22) eine Identifikationsplausibilisierung (25) aufweist, die in Abhängigkeit von den eingegebenen individuellen Eingangsgrößen einen Identifikationsmodul (24) aktiv oder passiv schaltet.

4. Regelschaltung nach einem oder mehreren der Ansprüche 1 bis 3, **dadurch gekennzeichnet, daß** die Eingangsgrößen die Giergeschwindigkeit und/oder der Lenkwinkel und/oder die Lenkwinkelgeschwindigkeit und/oder die Querbeschleunigung und/oder die Längsbeschleunigung und/oder die Schwimmwinkelgeschwindigkeit und/oder die Geschwindigkeit eines oder mehrerer Räder sind.

5. Regelschaltung nach einem oder mehreren der Ansprüche 1 bis 4, **dadurch gekennzeichnet, daß** die Regelschaltung ermittelt, ob die individuellen Eingangsgrößen in einem vorgegebenen Toleranzband liegen.

6. Regelschaltung nach Anspruch 5, **dadurch gekennzeichnet, daß** die Identifikationsplausibilisierung an den Identifikationsmodul Informationen darüber gibt, ob die individuellen Eingangsgrößen in dem Toleranzband liegen.

7. Regelschaltung nach einem oder mehreren der Ansprüche 1 bis 6, **dadurch gekennzeichnet, daß** der Parameter in Abhängigkeit von der separat ermittelten Meßgröße variiert wird, wenn die Bedingung 1,5 [m/s$^2$] < Querbeschleunigung < 6.5 [m/s$^2$] erfüllt ist.

8. Regelschaltung nach einem oder mehreren der Ansprüche 1 bis 7, **dadurch gekennzeichnet, daß** der Parameter in Abhängigkeit von der separat ermittelten Meßgröße variiert wird, wenn die Bedingung |Gierbeschleunigung| < 25 [Grad/s$^2$] erfüllt ist.

9. Regelschaltung nach einem oder mehreren der Ansprüche 1 bis 8, **dadurch gekennzeichnet, daß** der Parameter in Abhängigkeit von der separat ermittelten Meßgröße variiert wird, wenn die Bedingung |Lenkwinkelgeschwindigkeit| < 150 [Grad/s] erfüllt ist.

10. Regelschaltung nach einem oder mehreren der Ansprüche 1 bis 9, **dadurch gekennzeichnet, daß** der Parameter in Abhängigkeit von einem Bremsdruck variiert wird.

11. Regelschaltung nach einem oder mehreren der Ansprüche 1 bis 10, **dadurch gekennzeichnet, daß** der Parameter in Abhängigkeit von einem Motormoment variiert wird.

12. Regelschaltung nach einem oder mehreren der Ansprüche 1 bis 10, **dadurch gekennzeichnet, daß** der Parameter in Abhängigkeit von einem Reibmoment variiert wird.

**13.** Regelschaltung nach einem oder mehreren der Ansprüche 1 bis 12, **dadurch gekennzeichnet, daß** Abweichungen von individuellen Eingangsgrößen bestimmt und über einen Identifikationsalgorithmus Parameterabweichungen der Normparameter oder tatsächliche Normparameter generiert werden.

**14.** Regelschaltung nach Anspruch 13, **dadurch gekennzeichnet, daß** in einem Rechenblock die Abweichungen der individuellen Eingangsgrößen in die Parameterabweichungen der Normparameter oder tatsächliche Normparameter umgesetzt werden.

**15.** Regelschaltung nach einem oder mehreren der Ansprüche bis 14, **dadurch gekennzeichnet, daß** die Parameterabweichungen der Normparameter oder tatsächlichen Parameter innerhalb von vorgegebenen Grenzwertbändern bestimmt werden.

**16.** Regelschaltung nach einem oder mehreren der Ansprüche bis 15, **dadurch gekennzeichnet, daß** die Parameterabweichungen der Normparameter oder tatsächlichen Parameter bei stationärer Fahrzeugbewegung aus einer stationären Gleichung des Fahrzeugreferenzmodells berechnet werden.

**17.** Regelschaltung nach einem oder mehreren der Ansprüche 1 bis 16, **dadurch gekennzeichnet, daß** das Fahrzeugreferenzmodell das dynamische Einspurmodell ist.

**18.** Regelschaltung nach einem oder mehreren der Ansprüche 1 bis 17, **dadurch gekennzeichnet, daß** wenigstens einer der Parameter einer Schräglaufsteifigkeit eines oder mehrerer Reifen entspricht oder von der Schräglaufsteifigkeit eines oder mehrerer Reifen abhängt.

**19.** Regelschaltung nach Anspruch 18, **dadurch gekennzeichnet, daß** ein Eigenlenkgradient EG verwendet wird, der wie folgt von den Schräglaufsteifigkeiten abhängt:

$$EG = \frac{m\left(c_h \cdot l_h - c_v^{'} \cdot l_v\right)}{c_h \cdot c_v^{'} \cdot l},$$

wobei

m - eine Fahrzeugmasse,

$c_v^{'}$ - eine Gesamtseitensteifigkeit einer Vorderachse

$C_n$ - eine Schräglaufsteifigkeit von Reifen der Hinterachse,

$L_v$ - einen Abstand Vorderachse/Schwerpunkt

$l_h$ - einen Abstand Hinterachse/Schwerpunkt und

l - einen Radstand

bedeutet.

**20.** Regelschaltung nach Anspruch 19, **dadurch gekennzeichnet, daß** eine Gesamtseitensteifigkeit der Vorderachse verwendet wird, die wie folgt aus der Reifenschräglaufsteifigkeit und einer Lenkungssteifigkeit zusammensetzt:

$$\frac{1}{c_\upsilon^{'}} = \frac{1}{c_\upsilon} + \frac{1}{c_L^{'}}$$

wobei $c_L^{'}$ - die Lenkungssteifigkeit (bezogen auf einen Gesamtnachlauf) und $c_v$ - die Schräglauf steifigkeit der Reifen der Vorderachse bezeichnet.

**21.** Regelschaltung nach einem oder mehreren der Ansprüche 18 bis 20, **dadurch gekennzeichnet, daß** die Schräglaufsteifigkeit $c_v$ der Reifen der Vorderachse und die Schräglaufsteifigkeit $c_h$ der Reifen der Hinterachse in der Regelschaltung durch Veränderung um einen gleichen Faktor d modifiziert werden:

$$c_v' = c_{v,a}' \cdot d$$

und

$$c_h = c_{h,a} \cdot d.$$

**22.** Regelschaltung nach Anspruch 21, **dadurch gekennzeichnet, daß** der Faktor d im wesentlichen folgender Formel entspricht:

$$d = 1/f,$$

wobei f ein Faktor ist, der angibt, wie sich ein Eigenlenkgradient EG gegenüber einem ursprünglichen Eigenlenkgradienten $EG_a$ verändert hat.

**23.** Regelschaltung nach einem oder mehreren der Ansprüche 18 bis 20, **dadurch gekennzeichnet, daß** in der Regelschaltung die Schräglaufsteifigkeit der Reifen der Hinterachse $c_{h,a}$ um den Faktor d verändert wird und die Seitensteifigkeit der Vorderachse im wesentlichen konstant bleibt:

$$c_v' = konst$$

und

$$c_h = c_{h,a} \cdot d.$$

**24.** Regelschaltung nach Anspruch 23, **dadurch gekennzeichnet, daß** der Faktor d im wesentlichen folgender Formel entspricht:

$$d = \frac{m \cdot c_v \cdot l_v}{\left(m \cdot c_{h,a} \cdot l_h - f \cdot EG_a \cdot c_{h,a} \cdot c_v \cdot l\right)},$$

wobei f ein Faktor ist, der angibt, wie sich ein Eigenlenkgradient EG gegenüber einem ursprünglichen Eigenlenkgradienten $EG_a$ verändert hat und wobei .

m - eine Fahrzeugmasse
$c_v$ - eine Schräglaufsteifigkeit von Reifen einer Vorderachse
$c_h$ - eine Schräglaufsteifigkeit von Reifen einer Hinterachse,
$l_v$ - einen Abstand Vorderachse/Schwerpunkt,
$l_h$ - einen Abstand Hinterachse/Schwerpunkt und
l - einen Radstand

bezeichnet.

**25.** Regelschaltung nach einem oder mehreren der Ansprüche 18 bis 20, **dadurch gekennzeichnet, daß** in der Regelschaltung die Seitensteifigkeit der Vorderachse $c_v'$ um einen Faktor d verändert wird und die Schräglaufsteifigkeit der Reifen an der Hinterachse im wesentlichen konstant bleibt:

$$c_v' = c_{v,a}' \cdot d$$

und

$$c_h = konst.$$

**26.** Regelschaltung nach Anspruch 25, **dadurch gekennzeichnet, daß** der Faktor d im wesentlichen folgender Formel entspricht:

$$d = \frac{m \cdot c_h \cdot l_h}{\left(m \cdot c_{v,a} \cdot l_v + f \cdot EG_a \cdot c_h \cdot c_{v,a} \cdot l\right)},$$

wobei f ein Faktor ist, der angibt, wie sich ein Eigenlenkgradient EG gegenüber einem ursprünglichen Eigenlenkgradienten $EG_a$ verändert hat und wobei

*m* - eine Fahrzeugmasse
$c_v$ - eine Schräglaufsteifigkeit von Reifen einer Vorderachse
$c_h$ - eine Schräglaufsteifigkeit von Reifen einer Hinterachse,
$l_v$ - einen Abstand Vorderachse/Schwerpunkt,
$l_h$ - einen Abstand Hinterachse/Schwerpunkt und
l - einen Radstand

bezeichnet.

**27.** Regelschaltung nach einem oder mehreren der Ansprüche 18 bis 20, **dadurch gekennzeichnet, daß** in der Regelschaltung die Schräglaufsteifigkeit $c_{h,a}$ der Reifen der Hinterachse und die Schräglaufsteifigkeit $c_{v,a}$ der Reifen der Vorderachse um einen Faktor d verändert wird:

$$c_v = c_{v,a} \cdot d$$

und

$$c_h = c_{h,a} \cdot d.$$

**28.** Regelschaltung nach Anspruch 27, **dadurch gekennzeichnet, daß** der Faktor d im wesentlichen folgender Formel entspricht:

$$d = \frac{m\left(l_h \frac{c_{h,a}}{c_{v,a}} - l_v\right)}{c_{h,a}\left(EG_a \cdot f \cdot l - m \frac{l_h}{c_L}\right)},$$

wobei f ein Faktor ist, der angibt, wie sich ein Eigenlenkgradient EG gegenüber einem ursprünglichen Eigenlenk-

gradienten $EG_a$ verändert hat und wobei .

m - eine Fahrzeugmasse
$c_v$ - eine Schräglaufsteifigkeit von Reifen einer Vorderachse $c_h$ - eine Schräglaufsteifigkeit von Reifen einer Hinterachse,
$l_v$ - einen Abstand Vorderachse/Schwerpunkt,
$l_h$ - einen Abstand Hinterachse/Schwerpunkt und
l - einen Radstand

bezeichnet.

**29.** Regelschaltung nach einem oder mehreren der Ansprüche 18 bis 20, **dadurch gekennzeichnet, daß** in der Regelschaltung die Schräglaufsteifigkeit $c_{h\text{-neu}}$ wie folgt aus einer ursprünglichen Reifensteifigkeit $c_{h\text{-alt}}$ ermittelt wird:

$$\frac{c_{h_neu}}{c_{h_alt}} = \frac{\upsilon * \frac{K * c_f * l_f}{2 * c_{h_alt}}}{\frac{\upsilon}{2} + \frac{1}{\upsilon} * \frac{c_f * l^2}{2 * m * l_r} - \frac{\delta}{\dot{\psi}} * \frac{c_f * l}{2 * m * l_r}}$$

wobei K eine Konstante ist,

$\dot{\psi}$ eine Gierrate des Fahrzeugs ist ,
$\delta$ ein Lenkwinkel ist ,
1 ein Abstand der Fahrzeugzeugachsen (Radstand) ist,
v eine Fahrzeuggeschwindigkeit ist.

**30.** Regelschaltung nach einem oder mehreren der Ansprüche 13 bis 16, **dadurch gekennzeichnet, daß** die Parameterabweichungen der Normparameter oder tatsächliche Normparameter über Algorithmen zur Parameteridentifikation erlernt werden.

**31.** Regelschaltung nach einem oder mehreren der Ansprüche 13, bis 16, **dadurch gekennzeichnet, daß** die Parameterabweichungen der Normparameter oder tatsächliche Normparameter nach einem Least Square-Verfahren (LS) und/oder einem verallgemeinerten Least Square-Verfahren (GLS) und/oder einem instrumentalen Variabelverfahren (IV) und/oder einem Maximum-Likelyhood-Verfahren (ML) und/oder einem Output-Error-Verfahren erlernt werden.

## Claims

**1.** Control circuit for controlling the driving stability of a vehicle where the input values determining the course of track are input in a vehicle model circuit which on the basis of a vehicle reference model reproducing the characteristics of the vehicle defines at least one nominal value for a control quantity subject to parameters memorised in the vehicle reference model,
**characterized in that** at least one of the parameters is varied subject to at least one measured value determined during a stationary driving behaviour.

**2.** Control circuit according to claim 1,
**characterized in that** one vehicle identification means (22) is foreseen, the output signals of which are transmitted to the vehicle reference model (23) and that the output signals adapt to one or more standard parameters memorised in the vehicle reference model (23) or substitute by one or more newly built standard parameters in consideration of at least one individual condition quantity of the vehicle (11).

**3.** Control circuit according to claim 2,
**characterized in that** the vehicle identification means (22) is provided with an identification plausibilisation (25) switching an identification module (24) into active or passive mode subject to the individual input quantities.

**4.** Control circuit according to one or more of claims 1 to 3,

**characterized in that** the yaw speed and/or the steering angle and/or the steering angle speed and/or the transverse acceleration and/or the longitudinal acceleration and/or the slip angle speed and/or the speed of one or more wheels are the input quantities.

**5.** Control circuit according to one or more of claims 1 to 4,
**characterized in that** the control circuit determines whether the individual input quantities are lying within a predefined tolerance range.

**6.** Control circuit according to claim 5,
**characterized in that** the identification plausibilisation informs the identification module as to whether the individual input quantities are lying within the tolerance range.

**7.** Control circuit according to one or more of claims 1 to 6,
**characterized in that** the parameter is varied subject to the separately determined measuring quantity, if the condition 1.5 [$m/s^2$] < transverse acceleration < 6.5 [$m/s^2$] is met.

**8.** Control circuit according to one or more of claims 1 to 7,
**characterized in that** the parameter is varied subject to the separately determined measuring quantity, if the condition |yaw acceleration| < 25 [$degrees/s^2$] is met.

**9.** Control circuit according to one or more of claims 1 to 8,
**characterized in that** the parameter is varied subject to the separately determined measuring quantity, if the condition |steering angle speed| < 150 [degrees/s] is met.

**10.** Control circuit according to one or more of claims 1 to 9,
**characterized in that** the parameter is varied subject to a brake pressure.

**11.** Control circuit according to one or more of claims 1 to 10,
**characterized in that** the parameter is varied subject to a motor torque.

**12.** Control circuit according to one or more of claims 1 to 10,
**characterized in that** the parameter is varied subject to a friction moment.

**13.** Control circuit according to one or more of claims 1 to 12,
**characterized in that** deviations from individual input values are determined and parameter deviations of the standard parameters or actual standard parameters are generated by means of an identification algorithm.

**14.** Control circuit according to claim 13,
**characterized in that** the deviations of the individual input values are converted into parameter deviations of the standard parameters or actual standard parameters in a computing unit.

**15.** Control circuit according to one or more of claims 13 to 14,
**characterized in that** the parameter deviations from the standard parameters or the actual parameters are defined within the predetermined limit value ranges.

**16.** Control circuit according to one or more of claims 13 to 15,
**characterized in that** the parameter deviations of the standard parameters or the actual parameters are calculated with a stationary vehicle motion on the basis of a stationary equation of the vehicle reference model.

**17.** Control circuit according to one or more of claims 1 to 16,
**characterized in that** the single-track model is the vehicle reference model.

**18.** Control circuit according to one or more of claims 1 to 17,
**characterized in that** at least one of the parameters corresponds to a lateral tire stiffness of one or more tires or depends on the lateral tire stiffness of one or more tires.

**19.** Control circuit according to claim 18,
**characterized in that** a self-steering gradient EG is used depending as follows on the lateral tire stiffness:

$$EG = \frac{m\left(c_h \cdot l_h - c_v^{'} \cdot l_v\right)}{c_h \cdot c_v^{'} \cdot l}$$

with

| | |
|---|---|
| m | being a vehicle mass |
| $C_v^{'}$ | being a total lateral stiffness on a front axle |
| $C_h$ | being a latéral tire stiffness on the rear axle |
| $l_v$ | being a distance front axle/centre of gravity |
| $l_h$ | being a distance rear axle/centre of gravity and |
| 1 | being a wheel base. |

**20.** Control circuit according to claim 19,
**characterized in that** a total lateral stiffness of the front axle is used consisting of a lateral tire stiffness and a steering stiffness as follows:

$$\frac{1}{c_\upsilon^{'}} = \frac{1}{c_\upsilon} + \frac{1}{c_L^{'}}$$

with $c'_L$ being the steering stiffness (with regard to a total trail) and $c_v$ being the lateral tire stiffness of the front axle.

**21.** Control circuit according to one or more of claims 18 to 20,
**characterized in that** the lateral tire stiffness $c_v$ of the front axle tires and the lateral tire stiffness $c_h$ of the rear axle tires are modified in the control circuit by modification by an equal factor d:

$$c_v^{'}=c_{v,a}^{'}\cdot d$$

and

$$c_h=c_{h,a}\cdot d.$$

**22.** Control circuit according to claim 21,
**characterized in that** factor d corresponds essentially to the following formula:

$$d = 1/f$$

f being a factor which indicates how much the self-steering gradient EG has changed with regard to the original self-steering gradient $EG_a$.

**23.** Control circuit according to one or more of claims 18 to 20,
**characterized in that** the lateral tire stiffness on the rear axle $c_{h,a}$ is modified in the control circuit by factor d and that the lateral stiffness of the front axle remains essentially constant:

$$c_v^{'}= konst$$

and

$$c_h=c_{h,a}\cdot d.$$

**24.** Control circuit according to claim 23,
**characterized in that** factor d corresponds essentially to the following formula:

$$d = \frac{m \cdot c_v \cdot l_v}{\left(m \cdot c_{h,a} \cdot l_h - f \cdot EG_a \cdot c_{h,a} \cdot c_v \cdot l\right)}$$

f being a factor which indicates how much a self-steering gradient EG has changed with regard to the original self-steering gradient $EG_a$ and
m being a vehicle mass
$c_v$ being a lateral tire stiffness of the front axle tires
$c_h$ being a lateral tire stiffness of the rear axle tires
$l_v$ being a distance front axle/centre of gravity
$l_h$ being a distance rear axle/centre of gravity
l being a wheel base.

**25.** Control circuit according to one or more of claims 18 to 20,
**characterized in that** the lateral stiffness of the front axle $c_v'$ is changed by a factor d in the control circuit and that the lateral tire stiffness of the rear axle tires remains essentially constant:

$$c_v' = c_{v,a} \cdot d$$

and

$$c_h = konst.$$

**26.** Control circuit according to claim 25,
**characterized in that** factor d corresponds essentially to the following formula:

$$d = \frac{m \cdot c_h \cdot l_h}{\left(m \cdot c_{v,a} \cdot l_v + f \cdot EG_a \cdot c_h \cdot c_{v,a} \cdot l\right)}$$

f being a factor which indicates how much the self-steering gradient EG has changed with regard to the original self-steering gradient $EG_a$

- m being a vehicle mass
- $C_v$ being a lateral tire stiffness of the front axle tires
- $c_h$ being a lateral tire stiffness of the rear axle tires
- $l_v$ being the distance front axle/centre of gravity
- $l_h$ being the distance rear axle/centre of gravity
- l being a wheelbase

**27.** Control circuit according to one or more of claims 18 to 20,
**characterized in that** the lateral tire stiffness $C_{h,a}$ of the rear axle tires and the lateral tire stiffness $C_{v,a}$ of the front axle tires are modified by a factor d in the control circuit:

$$c_v = c_{v,a} \cdot d$$

and

$$c_h = c_{h,a} \cdot d.$$

**28.** Control circuit according to claim 27,
**characterized in that** factor d corresponds essentially to the following formula:

$$d = \frac{m\left(l_h \frac{c_{h,a}}{c_{v,a}} - l_v\right)}{c_{h,a}\left(EG_a \cdot f \cdot l - m\frac{l_h}{c_L}\right)}$$

f being a factor which indicates how much the self-steering gradient EG has changed with regard to the original self-steering gradient $EG_a$

- m being a vehicle mass
- $c_v$ being a lateral tire stiffness of the front axle tires
- $C_h$ being a lateral tire stiffness of the rear axle tires
- $l_v$ being the distance front axle/centre of gravity
- $l_h$ being the distance rear axle/centre of gravity
- l being a wheelbase

**29.** Control circuit according to one or more of claims 18 to 20,
**characterized in that** the lateral tire stiffness $C_{h_neu}$ is determined as follows from the original lateral tire stiffness $C_{h_alt}$:

$$1024 * \frac{c_{r_neu}}{c_{r_alt}} = \frac{\upsilon * \frac{1024 * c_f * l_f}{2 * c_{r_alt}}}{\frac{\upsilon}{2} + \frac{1}{\upsilon} * \frac{c_f * l^2}{2 * m * l_r} - \frac{\delta}{\psi} * \frac{c_f * l}{2 * m * l_r}} = \Delta C_{r_corr_fac}$$

- K being a constant
- $\dot{\psi}$ being a yaw rate of the vehicle
- $\delta$ being a steering angle
- l being the distance of the vehicle axles (wheel base)
- v being a vehicle speed.

**30.** Control circuit according to one or more of claims 13 to 16,
**characterized in that** the parameter deviations of the standard parameters or actual standard parameters are learned by algorithms for identifying the parameters.

**31.** Control circuit according to one or more of claims 13 to 16,
**characterized in that** the parameter deviations of the standard parameters or the actual standard parameters are learned by means of a Least Square procedure (LS) and/or a Generalised Least Square procedure (GLS) and/or an Instrumental Variable procedure (IV) and/or a Maximum Likelyhood procedure (ML) and/or an Output Error procedure.

## Revendications

1. Circuit de régulation servant à régler la stabilité de conduite d'un véhicule, dans lequel les grandeurs d'entrée, qui sont déterminantes pour la détermination de l'allure de la trajectoire, sont introduites dans un circuit de modèle de véhicule, qui, sur la base d'un modèle de référence du véhicule, qui simule des caractéristiques du véhicule, détermine au moins une valeur de consigne pour une grandeur de réglage en fonction de paramètres introduits dans le modèle de référence du véhicule, **caractérisé en ce qu'**on modifie au moins l'un des paramètres en fonction d'au moins une grandeur de mesure séparée, déterminée dans le cas d'un comportement de conduite stationnaire.

2. Circuit de régulation selon la revendication 1, **caractérisé en ce qu'**il est prévu un dispositif (22) d'identification du véhicule, dont les signaux de sortie sont envoyés au modèle de référence de véhicule (23) et qu'en tenant compte d'au moins une grandeur individuelle du véhicule (11), les signaux de sortie adaptent un ou plusieurs paramètres stockés insérés dans le modèle de référence de véhicule (23) ou remplacent par un ou plusieurs paramètres normalisés nouvellement formés.

3. Circuit de régulation selon la revendication 2, **caractérisé en ce que** le dispositif (22) d'identification de véhicule comporte une vraisemblance d'identification (25), qui rend actif ou passif un module d'identification (24) en fonction des grandeurs d'entrée individuelles introduites.

4. Circuit de régulation selon une ou plusieurs des revendications 1 à 3, **caractérisé en ce que** les grandeurs d'entrée sont la vitesse de lacet et/ou l'angle de braquage et/ou la vitesse angulaire de braquage et/ou l'accélération transversale et/ou l'accélération longitudinale et/ou la vitesse angulaire d'attitude et/ou la vitesse d'une ou de plusieurs roues.

5. Circuit de régulation selon une ou plusieurs des revendications 1 à 4, **caractérisé en ce que** le circuit de régulation détermine si les grandeurs d'entrée individuelles sont situées dans une plage prédéterminée de tolérance.

6. Circuit de régulation selon la revendication 5, **caractérisé en ce que** la vraisemblance d'identification fournit, dans le module d'identification, des informations indiquant si les grandeurs d'entrée individuelles sont situées ou non dans la plage de tolérance.

7. Circuit de régulation selon une ou plusieurs des revendications 1 à 6, **caractérisé en ce que** le paramètre est modifié en fonction de la grandeur de mesure déterminée séparément, lorsque la condition 1,5 [$m/s^2$] < accélération transversale < 6,5 [$m/s^2$] est satisfaite.

8. Circuit de régulation selon une ou plusieurs des revendications 1 à 7, **caractérisé en ce que** le paramètre est modifié en fonction de la grandeur de mesure déterminée séparément, lorsque la condition |accélération de lacet| < 25 [$degrés/s^2$] est satisfaite.

9. Circuit de régulation selon une ou plusieurs des revendications 1 à 8, **caractérisé en ce que** le paramètre est modifié en fonction de la grandeur de mesure déterminée séparément lorsque la condition |vitesse angulaire de braquage| < 150 [degrés/s].

10. Circuit de régulation selon une ou plusieurs des revendications. 1 à 9, **caractérisé en ce que** le paramètre est modifié en fonction d'une pression de freinage.

11. Circuit de régulation selon une ou plusieurs des revendications 1 à 10, **caractérisé en ce que** le paramètre est modifié en fonction d'un couple moteur.

12. Circuit de régulation selon une ou plusieurs des revendications 1 à 10, **caractérisé en ce que** le paramètre est modifié en fonction d'un couple de frottement.

13. Circuit de régulation selon une ou plusieurs des revendications 1 à 12, **caractérisé en ce que** des écarts de grandeurs d'entrée individuelles sont déterminés et que des écarts des paramètres normalisés ou des paramètres normalisés effectifs sont produits au moyen d'un algorithme d'identification.

14. Circuit de régulation selon la revendication 13, **caractérisé en ce que** les écarts des grandeurs d'entrée individuelles sont converties, dans un bloc de calcul, en les écarts des paramètres normalisés ou des paramètres normalisés effectifs.

**15.** Circuit de régulation selon une ou plusieurs des revendications 13 et 14, **caractérisé en ce que** les écarts des paramètres normalisés ou des paramètres effectifs sont déterminés à l'intérieur de bandes prédéterminées de valeurs limites.

**16.** Circuit de régulation selon une ou plusieurs des revendications 13 à 15, **caractérisé en ce que** les écarts des paramètres normalisés ou des paramètres effectifs sont calculés, dans le cas d'un déplacement stationnaire du véhicule, à partir d'une équation stationnaire du modèle de référence du véhicule.

**17.** Circuit de régulation selon une ou plusieurs des revendications 1 à 16, **caractérisé en ce que** le modèle de référence du véhicule est le modèle dynamique à une voie.

**18.** Circuit de régulation selon une ou plusieurs des revendications 1 à 17, **caractérisé en ce qu'**au moins l'un des paramètres correspond à une résistance à la dérive d'un ou de plusieurs pneumatiques ou dépend de la résistance à la dérive d'un ou de plusieurs pneumatiques.

**19.** Circuit de régulation selon la revendication 18, **caractérisé en ce qu'**on utilise un gradient propre de braquage EG qui dépend, de la manière suivante, des résistances à la dérive:

$$EG = \frac{m\left(c_h \cdot l_h - c_v' \cdot l_v\right)}{c_h \cdot c_v' \cdot l},$$

m - une masse du véhicule
$C_{\upsilon}'$ - rigidité latérale globale d'un essieu avant
$c_h$ - une résistance à la dérive de pneumatiques de l'essieu arrière,
$l_v$ - une distance essieu avant / centre de gravité,
$l_h$ - une distance essieu arrière / centre de gravité,
l - un empattement.

**20.** Circuit de régulation selon la revendication 19, **caractérisé en ce qu'**on utilise une rigidité latérale globale de l'essieu avant, qui se compose comme suit de la résistance à la dérive de pneumatique et d'une rigidité de la direction:

$$\frac{1}{c_{\upsilon}'} = \frac{1}{c_{\upsilon}} + \frac{1}{c_L'},$$

$c_L'$ désignant la rigidité de la direction (rapportée à une marche par inertie globale) et $c_v$ désignant la résistance à la dérive des pneumatiques de l'essieu avant.

**21.** Circuit de régulation selon l'une ou plusieurs des revendications 18 à 20, **caractérisé en ce que** la résistance à la dérive $c_v$ des pneumatiques de l'essieu avant et la résistance à la dérive $c_h$ des pneumatiques de l'essieu arrière sont modifiées dans le circuit de régulation moyennant une modification d'un facteur identique d:

$$c_{\upsilon}' = c'_{\upsilon,a}.d$$

et

$$c_h = c_{h,a}.d.$$

**22.** Circuit de régulation selon la revendication 21, **caractérisé en ce que** le facteur d correspond essentiellement à la formule suivante:

$$d = 1/f,$$

f étant un facteur qui indique comment un gradient de braquage propre EG a varié par rapport à un gradient de braquage propre d'origine $EG_a$.

**23.** Circuit de régulation selon l'une ou plusieurs des revendications 18 à 20, **caractérisé en ce que** dans le circuit de régulation, la résistance à la dérive $c_{h,a}$ des pneumatiques de l'essieu arrière est modifié du facteur d et la rigidité latérale de l'essieu avant reste essentiellement constante:

$$c'_{\upsilon} = \text{constante}$$

et

$$c_h = c_{h,a}.d.$$

**24.** Circuit de régulation selon la revendication 23, **caractérisé en ce que** le facteur d correspond essentiellement à la formule suivante:

$$d = \frac{m \cdot c_v \cdot l_v}{\left(m \cdot c_{h,a} \cdot l_h - f \cdot EG_a \cdot c_{h,a} \cdot c_v \cdot l\right)},$$

f étant un facteur qui indique comment un gradient de braquage propre EG a varié par rapport à un gradient de braquage propre d'origine $EG_a$, et avec

m - une masse du véhicule,
$C_v$ - une résistance à la dérive de pneumatiques d'un essieu avant,
$C_h$ - une résistance à la dérive de pneumatiques d'un essieu arrière,
$l_v$ - une distance essieu avant / centre de gravité,
$l_h$ - une distance essieu arrière / centre de gravité, et
l - un empattement.

**25.** Circuit de régulation selon une ou plusieurs des revendications 18 à 20, **caractérisé en ce que** dans le circuit de régulation, la rigidité latérale $c_{\upsilon}'$ de l'essieu avant est modifiée d'un facteur d et la résistance à la dérive des pneumatiques au niveau de l'essieu arrière reste essentiellement constante:

$$c_{\upsilon}' = c_{\upsilon}'_{,a}.d$$

et

$$c_h = \text{constante}.$$

**26.** Circuit de régulation selon la revendication 25, **caractérisé en ce que** le facteur d correspond essentiellement à la formule suivante:

$$d = \frac{m \cdot c_h \cdot l_h}{\left(m \cdot c_{v,a} \cdot l_v + f \cdot EG_a \cdot c_h \cdot c_{v,a} \cdot l\right)},$$

f étant un facteur qui indique comment un gradient de braquage propre EG a varié par rapport à un gradient de braquage propre d'origine $EG_a$, et avec

- m - une masse du véhicule,
- $C_v$ - une résistance à la dérive de pneumatiques d'un essieu avant,
- $C_h$ - une résistance à la dérive de pneumatiques d'un essieu arrière,
- $l_v$ - une distance essieu avant / centre de gravité,
- $l_h$ - une distance essieu arrière / centre de gravité, et
- l - un empattement.

**27.** Circuit de régulation selon une ou plusieurs des revendications 18 à 20, **caractérisé en ce que** dans le circuit de régulation, la résistance à la dérive $c_{h,\ a}$ des pneumatiques de l'essieu arrière et la résistance à la dérive $c_{v,a}$ des pneumatiques de l'essieu avant sont modifiées d'un facteur d :

$$c_\upsilon = c_{\upsilon,a}.d$$

et

$$c_h = c_{h,a}.d.$$

**28.** Circuit de régulation selon la revendication 27, **caractérisé en ce que** le facteur d correspond essentiellement à la formule suivante:

$$d = \frac{m\left(l_h \frac{c_{h,a}}{c_{v,a}} - l_v\right)}{c_{h,a}\left(EG_a \cdot f \cdot l - m \frac{l_h}{c_L}\right)},$$

f étant un facteur qui indique comment un gradient de braquage propre EG a varié par rapport à un gradient de braquage propre d'origine $EG_a$, et avec

- m - une masse du véhicule,
- $c_v$ - une résistance à la dérive de pneumatiques d'un essieu avant,
- $C_h$ - une résistance à la dérive de pneumatiques d'un essieu arrière,
- $l_v$ - une distance essieu avant / centre de gravité,
- $l_h$ - une distance essieu arrière / centre de gravité, et
- l - un empattement.

**29.** Circuit de régulation selon une ou plusieurs des revendications 18 à 20, **caractérisé en ce que** dans le circuit de régulation la résistance à la dérive $c_{h\text{-}neu}$ est déterminée comme suit à partir d'une rigidité initiale $c_{h\text{-}alt}$ du pneumatique:

$$\frac{c_{h_neu}}{c_{h_alt}} = \frac{\upsilon * \frac{K * c_f * l_f}{2 * c_{h_alt}}}{\frac{\upsilon}{2} + \frac{1}{\upsilon} * \frac{c_f * l^2}{2 * m * l_r} - \frac{\delta}{\dot{\psi}} * \frac{c_f * l}{2 * m * l_r}}$$

K étant une constante, avec

- $\psi$ une vitesse de lacet du véhicule,
- $\delta$ un angle de braquage,
- l une distance des essieux du véhicule (empattement),
- v une vitesse du véhicule.

**30.** Circuit de régulation selon une ou plusieurs des revendications 13 à 16, **caractérisé en ce que** les écarts des paramètres normalisés ou des paramètres normalisés effectifs sont appris au moyen d'algorithmes pour l'identification des paramètres.

**31.** Circuit de régulation selon une ou plusieurs des revendications 13 à 16, **caractérisé en ce que** les écarts des paramètres normalisés ou des paramètres normalisés effectifs sont appris au moyen d'un procédé des moindres carrés (LS) et/du d'un procédé des moindres carrés généralisé (GLS) et/ou d'un procédé variable instrumental (IV) et/ou d'un procédé de vraisemblable maximale (ML) et/ou d'un procédé d'erreur de sortie.

Fig. 1

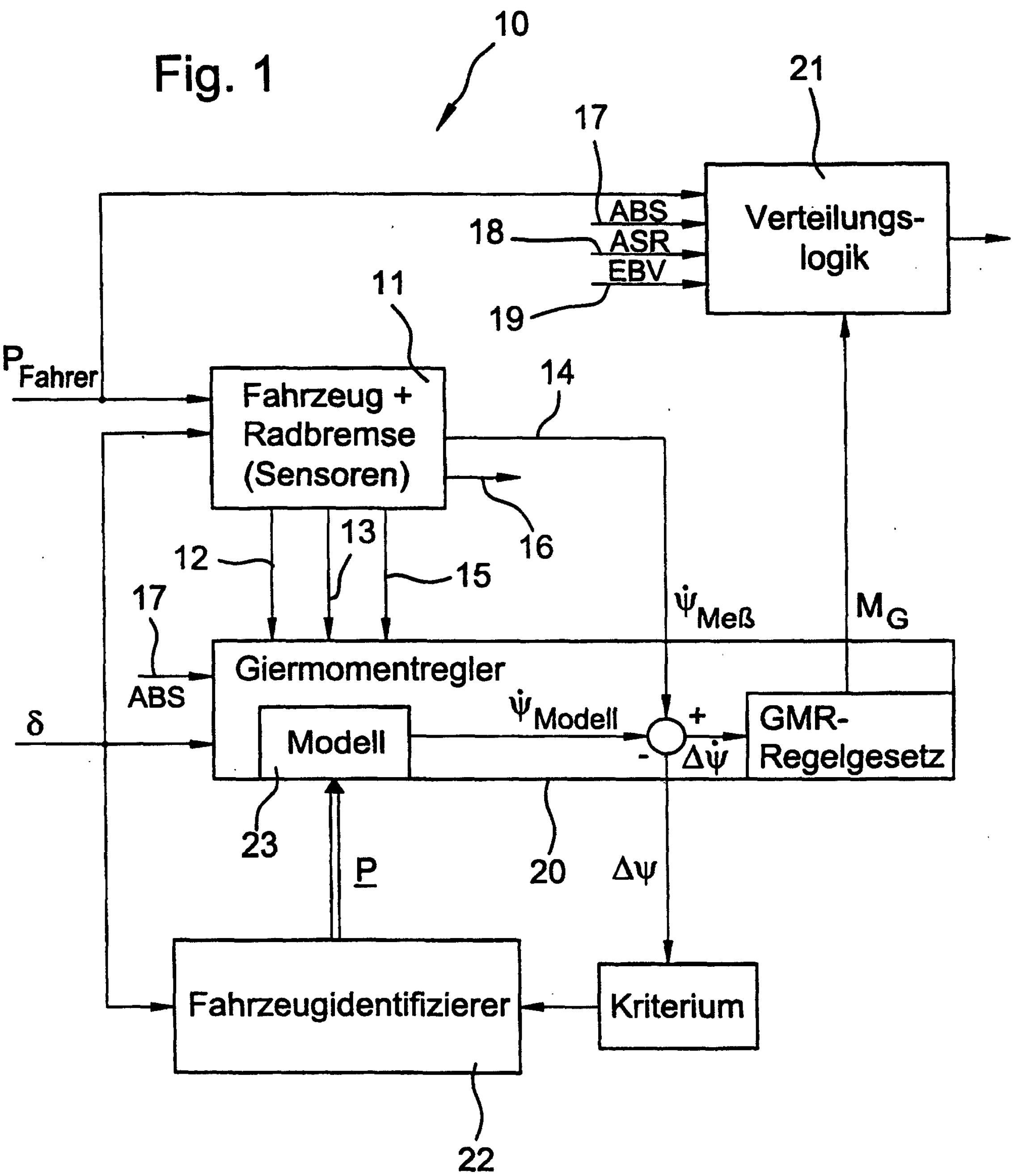
10
21
17
ABS
18
ASR
EBV
19
Verteilungs-
logik
11
$P_{Fahrer}$
Fahrzeug +
Radbremse
(Sensoren)
14
16
12
13
15
17
ABS
$\dot{\psi}_{Meß}$
$M_G$
Giermomentregler
δ
Modell
$\dot{\psi}_{Modell}$
+
-
$\Delta\dot{\psi}$
GMR-
Regelgesetz
23
P
20
Δψ
Fahrzeugidentifizierer
Kriterium
22

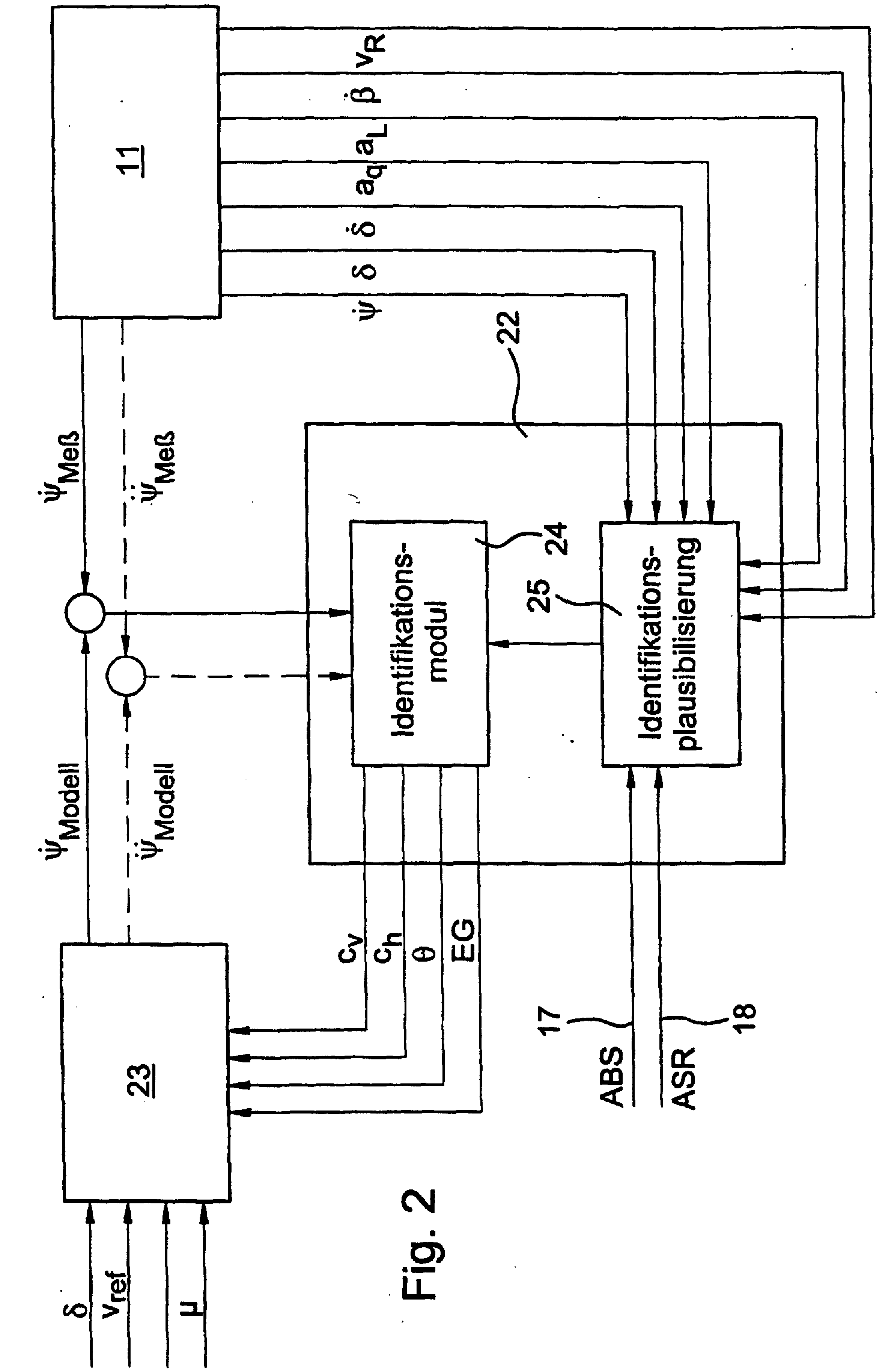
11
22
23
24
25
Identifikations-modul
Identifikations-plausibilisierung
$\dot{\psi}_{Meß}$
$\ddot{\psi}_{Meß}$
$\dot{\psi}_{Modell}$
$\ddot{\psi}_{Modell}$
$\dot{\psi}$ $\delta$ $\dot{\delta}$ $a_q$ $a_L$ $\dot{\beta}$ $v_R$
$c_v$ $c_h$ $\theta$ EG
ABS
ASR
17
18
$\delta$ $v_{ref}$ $\mu$

Fig. 2

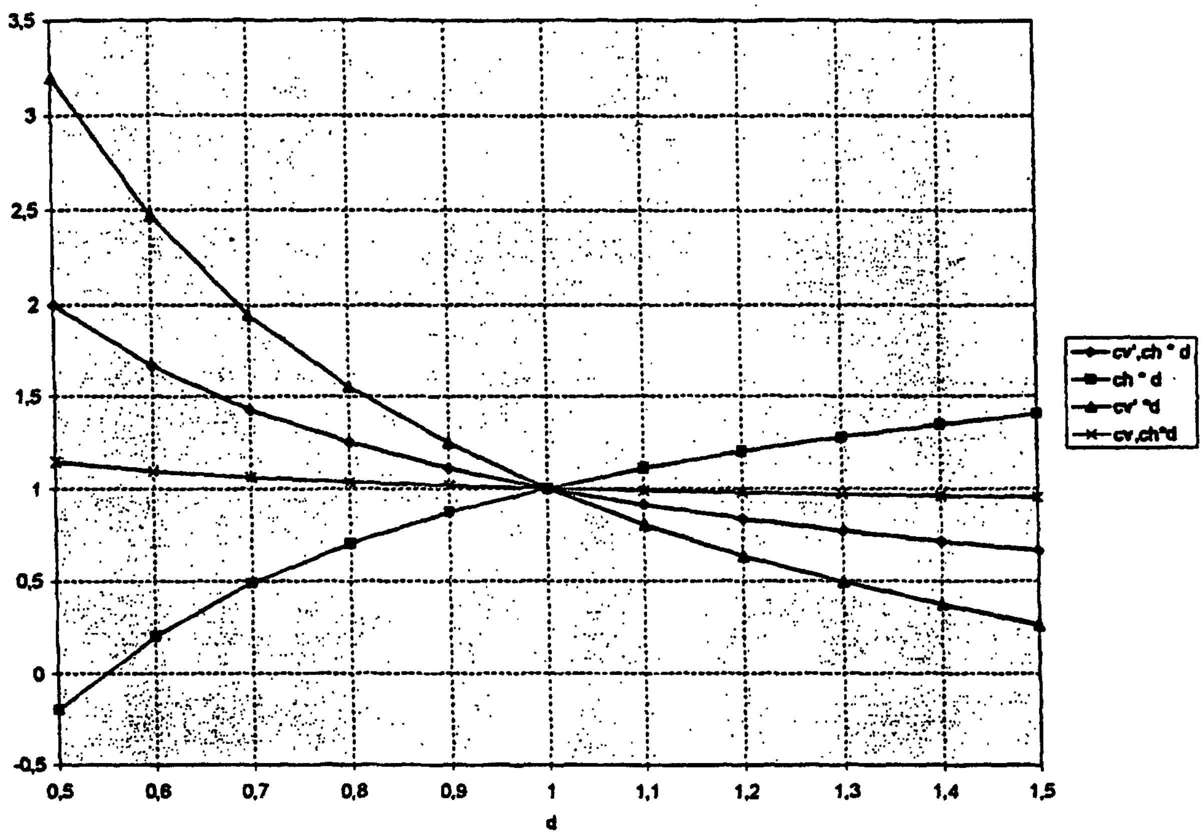


*Fig.3* : Verläufe der Funktionen aus Gl.(20) - (23)

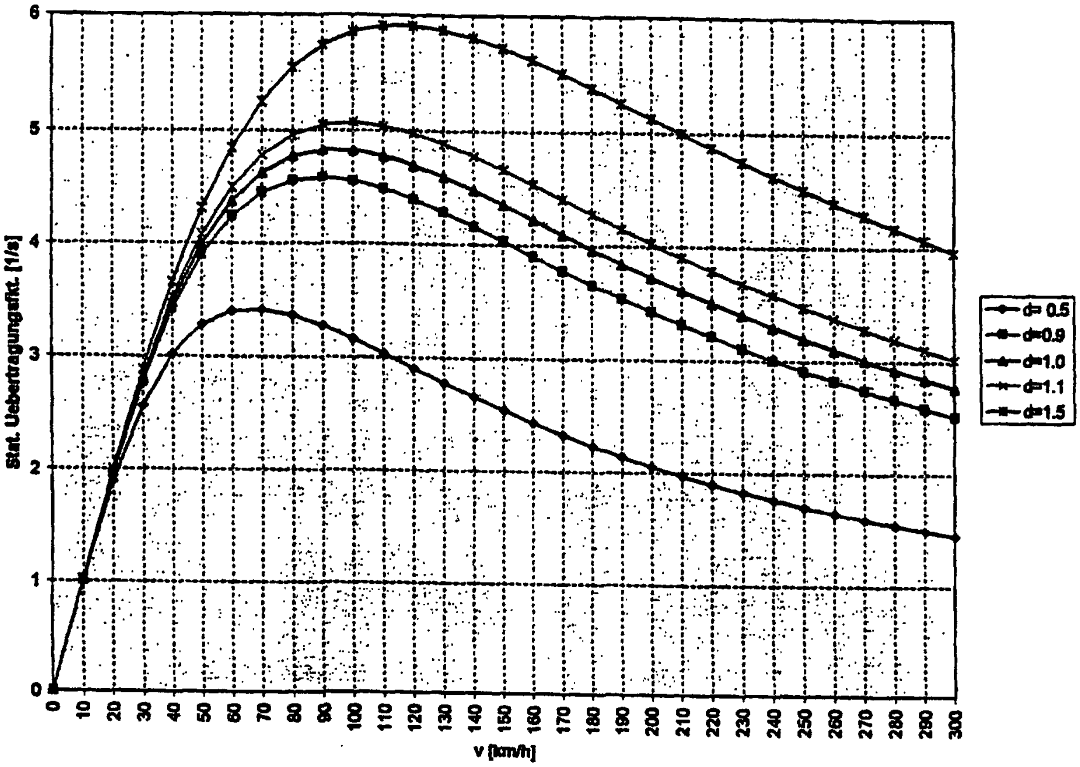


Fig. 4 : Hypothese 1

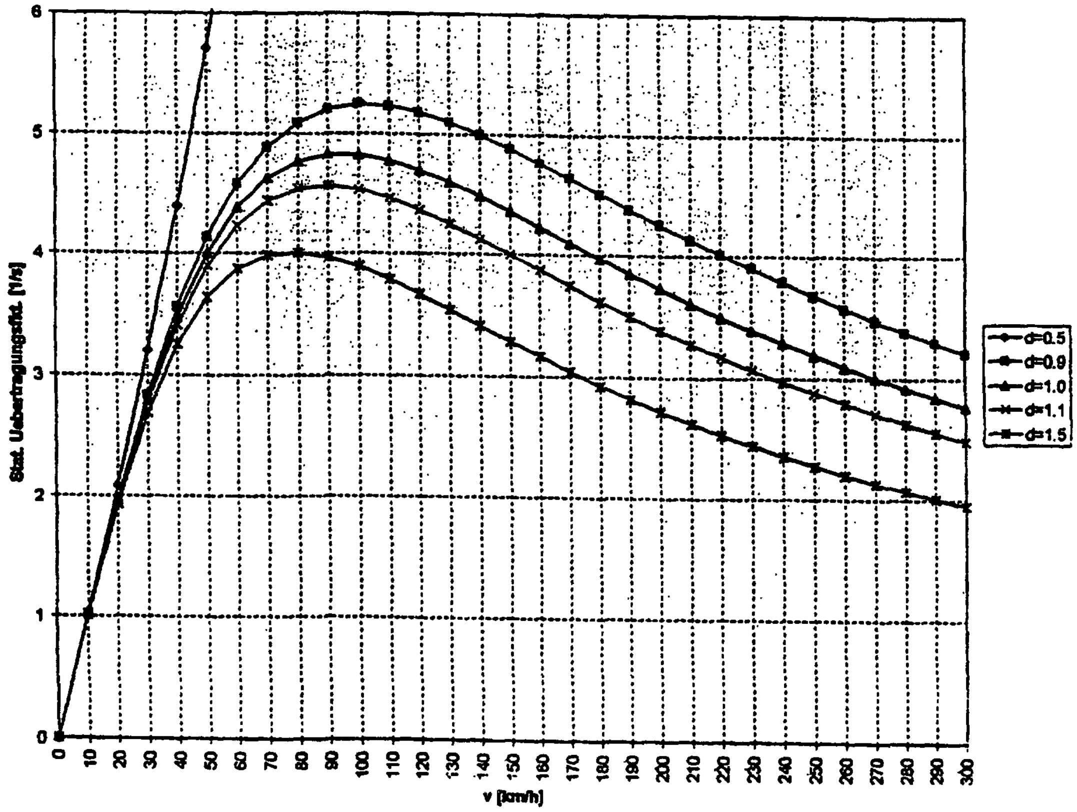


Fig. 5 : Hypothese 2

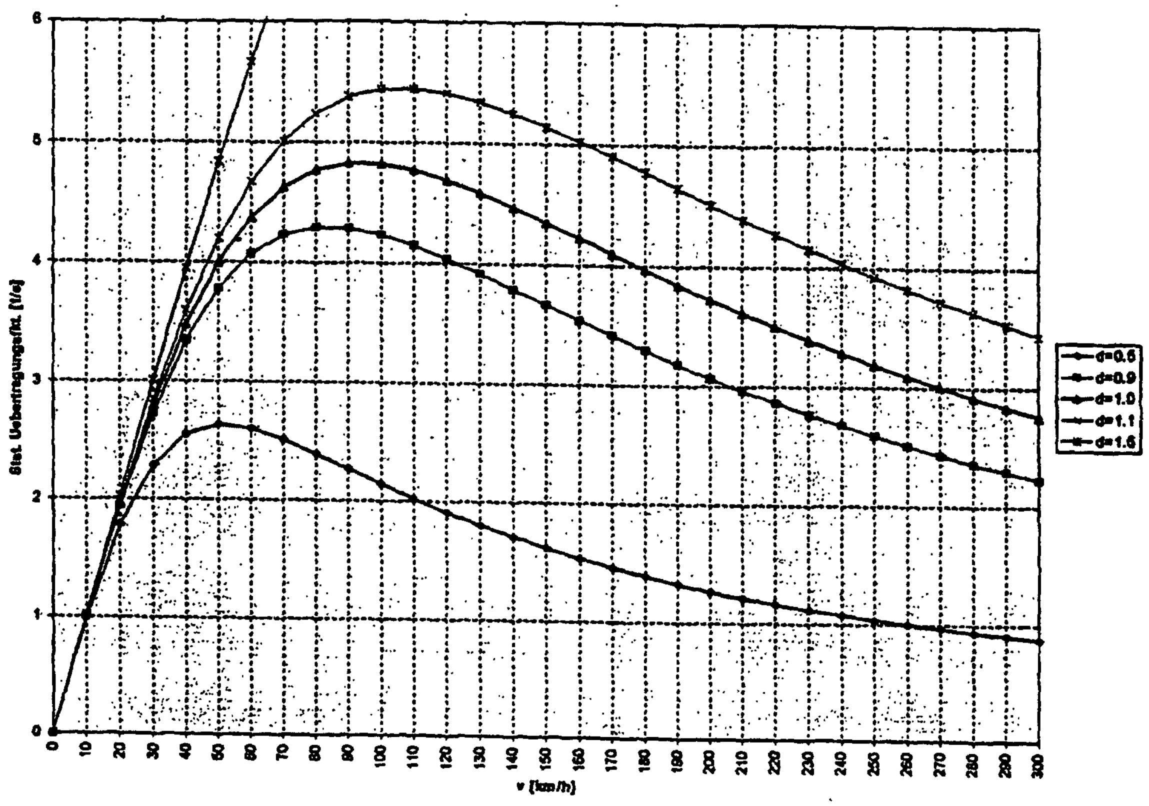


*Fig. 6* : Hypothese 3

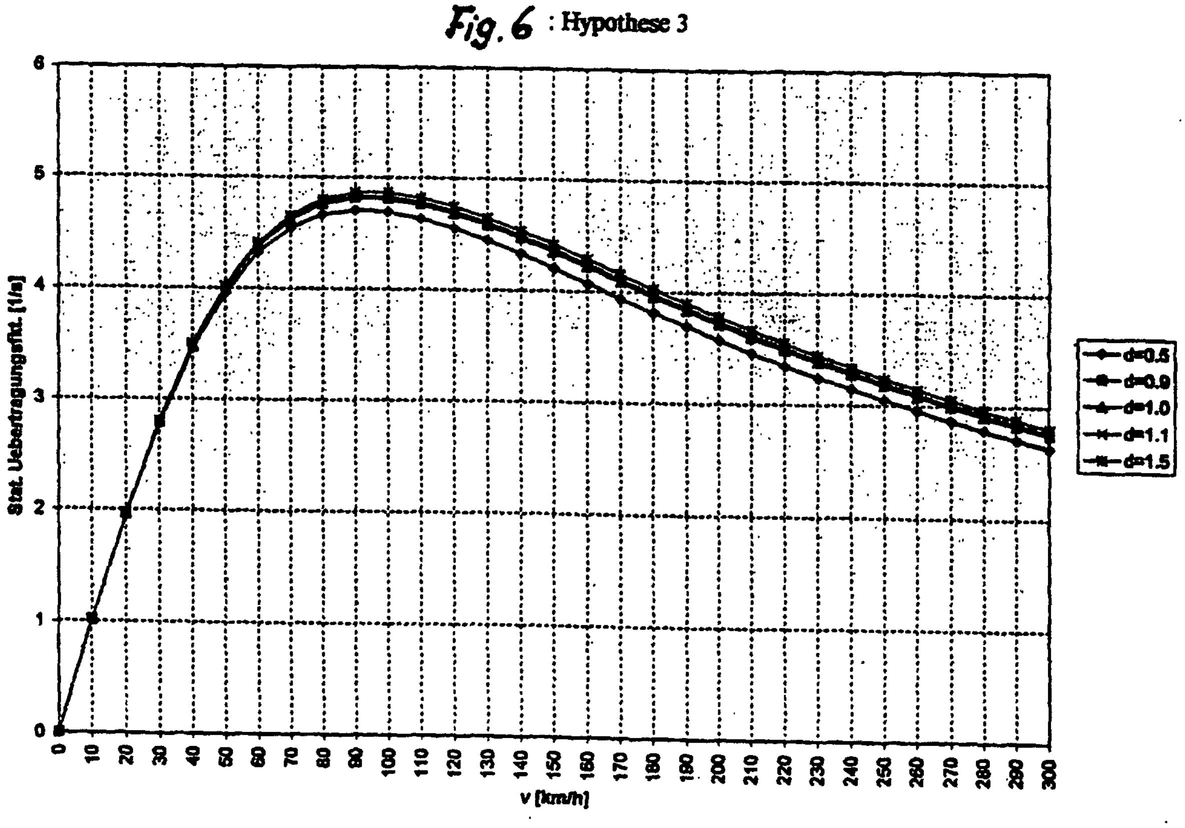


*Fig 7* : Hypothese 4